# EUROPEAN PATENT APPLICATION

(11) **EP 4 311 286 A1**
(43) Date of publication of application: **24.01.2024**
(21) Application number: 22778990.6
(22) Date of filing: 30.03.2022
(51) Int. Cl.: H04W 12/02

(54) **RELAY COMMUNICATION METHOD AND DEVICE**

(30) Priority: 01.04.2021 CN 202110358471
(71) Applicant: Huawei Technologies Co., Ltd., Longgang Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); LI, Xiangyu, Shenzhen, Guangdong 518129 (CN); CAI, Yu, Shenzhen, Guangdong 518129 (CN); YAO, Chuting, Shenzhen, Guangdong 518129 (CN)
(74) Representative: Gill Jennings & Every LLP
(86) International application number: PCT/CN2022/083947
(87) International publication number: WO 2022/206808

(57) **Abstract**

This specification discloses a relay communication method and an apparatus, and relates to the field of communication technologies, to ensure security in a relay user equipment (relay user equipment, relay UE) discovery process. The method includes: Second user equipment broadcasts a layer 2 (layer 2, L2) identifier, and first user equipment receives the L2 identifier of the second user equipment, and reports the L2 identifier of the second user equipment and signal quality of the second user equipment to a first access network device. Alternatively, a radio network temporary identifier (radio network temporary identifier, RNTI) of second user equipment is sent to first user equipment through a unicast connection. Alternatively, second user equipment broadcasts a first identifier, first user equipment receives the first identifier of the second user equipment, and reports the first identifier of the second user equipment and signal quality of the second user equipment to a first access network device, and the first access network device selects target second user equipment. In a relay UE discovery process, leakage of a UE RNTI is avoided, and security of relay UE is ensured.

## Description

This application claims priority to Chinese Patent Application No. 202110358471.X, filed with the China National Intellectual Property Administration on April 1, 2021 and entitled "RELAY COMMUNICATION METHOD AND APPARATUS", which is incorporated herein by reference in its entirety.

### TECHNICAL FIELD

Embodiments of this application relate to the field of communication technologies, and in particular, to a relay communication method and an apparatus.

### BACKGROUND

In a communication system, to improve communication quality, appropriate relay UE (relay UE) may be selected for remote user equipment (user equipment, UE), to provide a relay service for the remote UE. By using a relay discovery (relay discovery) procedure, relay UEs around the remote UE may be discovered, and the relay UE that provides a relay service for the remote UE is selected.

There may be a security problem in a relay UE discovery process, and how to ensure security in the relay UE discovery process is an urgent problem that needs to be resolved.

### SUMMARY

Embodiments of this application provide a relay communication method and an apparatus, to ensure security in a relay UE discovery process.

To ensure the security in the relay UE discovery process, embodiments of this application provide the following solutions. The following separately describes the solutions by using an example in which remote UE is first user equipment, relay UE is second user equipment, a source access network device is a first access network device, and a target access network device is a second access network device.

According to a first aspect, an embodiment of this application provides a relay communication method. The method is applied to first user equipment. For example, the method may be performed by the first user equipment, or a functional module, a chip, or a chip system in the first user equipment. The method may include: receiving an L2 identifier corresponding to at least one second user equipment; and sending first information to a first access network device. The first information may be used by the first access network device to select target second user equipment. For example, the first information may include signal quality of the at least one second user equipment and identification information of the at least one second user equipment (for example, the L2 identifier or a temporary identifier of the second user equipment).

Based on the method according to the first aspect, relay UE broadcasts an L2 identifier of the relay UE. Because the L2 identifier identifies only an SL of the relay UE, and does not involve a radio network identifier that is related to the relay UE and from which network information of the relay UE can be obtained, for example, an RNTI of a relay device, a security risk caused to the relay UE due to leakage of the radio network identifier (for example, the RNTI) of the relay UE is avoided, and security of the relay UE is ensured.

In a possible design, the method further includes: receiving first indication information from the first access network device. The first indication information may indicate the target second user equipment, the target second user equipment may be configured to provide a relay service for the first user equipment, and the first user equipment may perform relay communication with a second access network device via the target second user equipment. Based on this possible design, remote UE reports identification information of the relay UE and signal quality of the relay UE to the first access network device. The first access network device selects the relay UE that finally provides a relay service for the remote UE, and indicates the selected target relay UE to the remote UE, so that a network side device has good control on an entire network.

In a possible design, the method further includes: obtaining second information from the target second user equipment based on the first indication information, and sending the second information to the first access network device. The second information may indicate an RNTI of the target second user equipment and a cell ID of the target second user equipment. For example, the second information may include the RNTI of the target second user equipment and the cell ID of the target second user equipment. It should be noted that if the first information carries a cell ID of the second user equipment, the second information may not carry the cell ID of the target second user equipment.

Based on this possible design, the first access network device is notified of the RNTI of the target second user equipment, and the first access network device is triggered to indicate the RNTI of the target second user equipment to the second access network device, so that the second access network device triggers establishment of a relay path from the remote UE to the target second user equipment and then from the target second user equipment to a network side.

In a possible design, the obtaining second information from the target second user equipment may include: obtaining the second information from the target second user equipment through a unicast connection. Because information transmitted through the unicast connection can be parsed by only a receive end, and another device other than the receive end cannot obtain the second information through parsing, transmission security of the second information is ensured.

In a possible design, the RNTI of the second user equipment (including the target second user equipment) in this embodiment of this application may include but is not limited to a system architecture evolution-temporary mobile subscriber identifier (system architecture evolution-temporary mobile subscriber identifier, S-TMSI) of the second user equipment, an inactive radio network temporary identifier (inactive radio network temporary identifier, I-RNTI) of the second user equipment, or a temporary mobile subscriber identifier (cell radio network temporary identifier, C-RNTI) of the second user equipment. Based on this possible design, the RNTI of the second user equipment is effectively and flexibly designed.

In a possible design, the method further includes: sending identification information of the first user equipment to the target second user equipment based on the first indication information, to trigger the target second user equipment to send a second request to the second access network device to request the second access network device to establish a relay path that passes through the target second user equipment, where the second request may carry the identification information of the first user equipment. In this way, the target second user equipment triggers the network side device to establish a relay path, to reduce signaling overheads.

It should be understood that the target second user equipment may be in a connected state or an inactive state. Before the target second user equipment sends the second request to the second access network device, the target second user equipment may establish a connection to the second network device through random access.

In a possible design, the identification information of the first user equipment may include but is not limited to an RNTI of the first user equipment, a temporary identifier of the first user equipment, or an L2 identifier of the first user equipment. In this way, the identification information that indicates the first user equipment can be flexibly and effectively designed.

According to a second aspect, an embodiment of this application further provides a relay communication method. The method may be applied to second user equipment. For example, the method may be performed by the second user equipment, or a functional module, a chip, or a chip system in the second user equipment. The method may include: In a relay discovery scenario, the second user equipment broadcasts an L2 identifier of relay UE, establishes a unicast connection to first user equipment, and provides a relay service for the first user equipment.

Based on the method according to the second aspect, the second user equipment broadcasts the L2 identifier of the relay UE. Because the L2 identifier identifies only an SL of the relay UE, and does not involve a radio network identifier that is related to the relay UE and from which network information of the relay UE can be obtained, for example, an RNTI of a relay device, a security risk caused to the relay UE due to leakage of the radio network identifier (for example, the RNTI) of the relay UE is avoided, and security of the relay UE is ensured. In addition, the second user equipment may establish the unicast connection to the first user equipment, to provide the relay service for the first user equipment, to ensure quality of communication between the first user equipment and a network side device.

In a possible design, the method further includes: The second user equipment sends, to the first user equipment, second information indicating an RNTI and/or a cell ID of the relay UE, where the second information may include an RNTI and/or a cell ID of the second user equipment, so that the first user equipment sends the RNTI and/or the cell ID of the second user equipment to the network side device, to trigger the network side device to switch a direct path that is from the first user equipment to the network side device to a relay path, so that the first user equipment performs data transmission with the network side device through the relay path. This improves data transmission quality of the first user equipment.

For related descriptions of the RNTI of the second user equipment, refer to the foregoing descriptions. Details are not described again.

In a possible design, the method further includes: receiving identification information from the first user equipment, and sending a second request to a second access network device, to request the second access network device to establish a relay path that passes through target second user equipment, where the second request may carry the identification information of the first user equipment. In this way, the target second user equipment triggers the network side device to establish the relay path, to reduce signaling overheads. In addition, the first user equipment can perform data transmission with the network side device through the relay path, thereby improving data transmission quality of the first user equipment.

It should be understood that if the second user equipment is in an idle state or an inactive state, the second user equipment may further establish a connection to the second access network device through random access, and then send the second request.

In a possible design, the identification information of the first user equipment may include but is not limited to an RNTI of the first user equipment, a temporary identifier of the first user equipment, or an L2 identifier of the first user equipment. In this way, the identification information that indicates the first user equipment can be flexibly and effectively designed.

According to a third aspect, this application further provides a relay communication method. The method may be applied to a first access network device. For example, the method may be applied to the first access network device, or a functional module, a chip, or a chip system included in the first access network device. The method may include: The first access network device receives first information from first user equipment, where the first information may be used by the first access network device to select target second user equipment, for example, the first information may include signal quality of at least one second user equipment and identification information of the at least one second user equipment (for example, an L2 identifier or a temporary identifier of second user equipment); and the first access network device selects the target second user equipment based on the first information, and indicates the target second user equipment to the first user equipment, for example, the first access network device sends first indication information to the first user equipment, where the first indication information indicates the target second user equipment, and the first indication information may include identification information of the target second user equipment.

In a possible design, the method further includes: receiving second information from the first user equipment, and sending a third request to a second access network device based on the second information. The second information indicates an RNTI and/or a cell ID of the target second user equipment. For example, the second information may include the RNTI and/or the cell ID of the target second user equipment, and the third request is used to request the second access network device to perform relay communication with the first user equipment via the target second user equipment. Based on this possible design, it can be ensured that a direct path between the first user equipment and a network side device is switched to a relay path, so that the first user equipment performs data transmission with the network side device through the relay path, thereby improving data transmission quality of the first user equipment.

In a possible design, the method further includes: sending, to the second access network device, the third request that carries identification information of the first user equipment, so that the second access network device learns, based on the third request, that a relay path is established for the first user equipment, to ensure that the direct path between the first user equipment and the network side device is switched to the relay path.

Specifically, the third request may be sent to the second access network device based on the cell ID of the target second user equipment. In this embodiment of this application, the cell ID of the second user equipment may be carried by the second user equipment in a discovery message and broadcast, and is carried by the first user equipment in the first information. In this embodiment of this application, the first information may further carry the identification information of the first user equipment. In this way, signaling overheads for obtaining the cell ID of the second user equipment are reduced, and a system design is simplified.

In a possible design, the identification information of the first user equipment may include but is not limited to an RNTI of the first user equipment, a temporary identifier of the first user equipment, or an L2 identifier of the first user equipment. In this way, the identification information that indicates the first user equipment can be flexibly and effectively designed.

According to a fourth aspect, an embodiment of this application provides a relay communication method. The method is applied to first user equipment. For example, the method may be performed by the first user equipment, or a functional module, a chip, or a chip system in the first user equipment. The method may include: receiving a discovery message broadcast by at least one second user equipment; determining, based on the discovery message, second user equipment that can serve as a relay of the first user equipment; obtaining an RNTI of the second user equipment from the determined second user equipment through a unicast connection; and sending first information to a first access network device, where the first information may be used by the first access network device to select target second user equipment, for example, the first information may include signal quality of the at least one second user equipment and the RNTI of the at least one second user equipment. It should be noted that, in this embodiment of this application, if a unicast connection has been established between relay UE and remote UE, a process of establishing the unicast connection between the relay UE and the remote UE is ignored.

Based on the method according to the fourth aspect, after broadcasting a discovery message, the relay UE triggers the remote UE to establish the unicast connection to the relay UE, and sends an RNTI of the relay UE to the remote UE through the unicast connection. Because information transmitted on the unicast connection can be parsed by only a receive end, a security risk caused to the relay UE due to leakage of a radio network identifier (for example, an RNTI) of the relay UE is avoided, and security of the relay UE is ensured. In addition, the remote UE reports the RNTI of the relay UE and signal quality of the relay UE to the first access network device, and the first access network device selects the relay UE that finally provides a relay service for the remote UE.

In a possible design, the method further includes: sending a first request to non-target second user equipment, to request to release a unicast connection to the non-target second user equipment, thereby improving resource utilization. The non-target second user equipment may be second user equipment that is determined by the remote UE and that has no unicast connection communication requirement with the remote UE. A determining manner may be that after selecting the target second user equipment, the first access network device sends first indication information to the remote UE, or after the first access network device delivers a radio resource control (radio resource control, RRC) reconfiguration message, the remote UE determines the second user equipment that has no unicast connection communication requirement with the remote UE.

According to a fifth aspect, an embodiment of this application further provides a relay communication method. The method may be applied to second user equipment. For example, the method may be performed by the second user equipment, or a functional module, a chip, or a chip system in the second user equipment. The method may include: The second user equipment broadcasts a discovery message (for example, may be referred to as a discovery message), establishes a unicast connection to first user equipment, and sends an RNTI of relay UE to the first user equipment through the unicast connection, to provide a relay service for the first user equipment.

Based on the method according to the fifth aspect, the second user equipment sends the RNTI of the relay UE to the first user equipment through the unicast connection. Because information transmitted through the unicast connection can be parsed by only a receive end, a security risk caused to the relay UE due to leakage of a radio network identifier (for example, the RNTI) of the relay UE is avoided, and security of the relay UE is ensured. In addition, the second user equipment may establish the unicast connection to the first user equipment, to provide the relay service for the first user equipment, to ensure quality of communication between the first user equipment and a network side device.

In a possible design, the method further includes: receiving a first request from the first user equipment, where the first request is used to request to release the unicast connection; and releasing the unicast connection between the first user equipment and the second user equipment based on the first request. In this way, some unnecessary unicast connections are released, thereby improving resource utilization.

For related descriptions of an RNTI of the second user equipment, refer to the foregoing descriptions. Details are not described again.

According to a sixth aspect, this application further provides a relay communication method. The method may be applied to a first access network device. For example, the method may be applied to the first access network device, or a functional module, a chip, or a chip system included in the first access network device. The method may include: The first access network device receives first information from first user equipment, where the first information may be used by the first access network device to select target second user equipment, for example, the first information may include signal quality of at least one second user equipment and an RNTI of the at least one second user equipment; and the first access network device selects the target second user equipment based on the first information, and indicates the target second user equipment to a second access network device, so that the second access network device establishes a relay path that passes through the target second user equipment.

In a possible design, the method further includes: sending first indication information to the first user equipment, to indicate the first user equipment to release a unicast connection (or referred to as an SL connection) between the first user equipment and non-target second user equipment.

According to a seventh aspect, an embodiment of this application provides a relay communication method. The method is applied to first user equipment. For example, the method may be performed by the first user equipment, or a functional module, a chip, or a chip system in the first user equipment. The method may include: receiving a discovery message (for example, may be referred to as a discovery message) that is sent by at least one second user equipment and that carries a first identifier; determining, based on the discovery message, second user equipment that can serve as a relay of the first user equipment, and in addition, obtaining signal quality of the second user equipment based on the discovery message sent by the second user equipment; and sending first information to a first access network device, where the first information may be used by the first access network device to select target second user equipment, for example, the first information may include the signal quality of the at least one second user equipment and the first identifier of the at least one second user equipment. The first identifier is obtained through encryption by using a first algorithm, the first identifier can be parsed by only a network side device, and the first identifier of the second user equipment corresponds to an RNTI of the second user equipment.

Based on the method according to the seventh aspect, relay UE broadcasts an identifier that is identified by only the network side device. Because only the network device can parse the identifier, a security risk caused to the relay UE due to leakage of a radio network identifier (for example, an RNTI) of the relay UE is avoided, and security of the relay UE is ensured. In addition, because the first identifier may be identified by the network side device, it is ensured that a second access network device establishes a relay path for remote UE based on the selected relay UE.

According to an eighth aspect, an embodiment of this application further provides a relay communication method. The method may be applied to second user equipment. For example, the method may be performed by the second user equipment, or a functional module, a chip, or a chip system in the second user equipment. The method may include: The second user equipment broadcasts a discovery message (for example, may be referred to as a discovery message), where the discovery message may carry a first identifier of the second user equipment, the first identifier is obtained through encryption by using a first algorithm, the first identifier may be parsed by only a network side device, and the first identifier of the second user equipment corresponds to an RNTI of the second user equipment.

Based on the method according to the eighth aspect, the second user equipment broadcasts an identifier that is identified by only the network side device. Because only the network device can parse the identifier, a security risk caused to relay UE due to leakage of a radio network identifier (for example, an RNTI) of the relay UE is avoided, and security of the relay UE is ensured. In addition, because the first identifier may be identified by the network side device, it is ensured that a second access network device establishes a relay path for remote UE based on the selected relay UE.

According to a ninth aspect, this application further provides a relay communication method. The method may be applied to a first access network device. For example, the method may be applied to the first access network device, or a functional module, a chip, or a chip system included in the first access network device. The method may include: The first access network device receives first information from first user equipment, where the first information may be used by the first access network device to select target second user equipment, for example, the first information may include signal quality of at least one second user equipment and a first identifier of the at least one second user equipment, the first identifier is obtained through encryption by using a first algorithm, the first identifier may be parsed by only a network side device, and the first identifier of the second user equipment corresponds to an RNTI of the second user equipment; and the first access network device selects the target second user equipment based on the first information, and indicates a first identifier of the target second user equipment to a second access network device, so that the second access network device establishes, for the first user equipment, a relay path that passes through the target second user equipment.

In this way, not only a security risk caused to relay UE by ensuring security in a relay UE discovery process is avoided, but also smooth switching from a direct path of the first user equipment to the relay path is ensured.

According to a tenth aspect, an embodiment of this application provides a relay communication method. The method is applied to first user equipment. For example, the method may be performed by the first user equipment, or a functional module, a chip, or a chip system in the first user equipment. The method may include: receiving a discovery message broadcast by at least one second user equipment; determining, based on the discovery message, second user equipment that can serve as a relay of the first user equipment, and in addition, obtaining signal quality of the second user equipment based on the discovery message sent by the second user equipment; selecting target second user equipment based on the signal quality of the second user equipment; and obtaining an RNTI and/or a cell ID of the target second user equipment from the target second user equipment.

Based on the method according to the tenth aspect, the first user equipment selects the target second user equipment, and obtains the RNTI and/or the cell ID from the target second user equipment through a unicast connection. Because information transmitted through the unicast connection can be parsed by only a receive end, a security risk caused to relay UE due to leakage of a radio network identifier (for example, an RNTI) of the relay UE is avoided, and security of the relay UE is ensured.

In a possible design, the method further includes: sending the RNTI and/or the cell ID of the target second user equipment to a first access network device, to trigger the first access network device to send a third request to a second access network device, where the third request indicates the RNTI of the target second user equipment to the second access network device, and the second access network device establishes a relay path from the first user equipment to the target second user equipment and then from the target second user equipment to the second access network device.

In a possible design, the method further includes: obtaining the cell ID of the target second user equipment from the target second user equipment, and sending the cell ID of the target second user equipment to a first access network device, to trigger the first access network device to send a third request to a second access network device, where the third request carries an identifier of the first user equipment. In addition, the first user equipment sends identification information of the first user equipment to the target second user equipment, to trigger the target second user equipment to send a second request to the second access network device to request the second access network device to establish a relay path for the first user equipment. For related descriptions of the identification information of the first user equipment, refer to the foregoing descriptions. Details are not described again.

Based on this possible design, remote UE triggers a network side device to establish a relay path from the remote UE to target relay UE and then from the target relay UE to the second access network device, to ensure smooth switching from a direct path to the relay path, so that the remote UE can perform data transmission with the network side device through the relay path, thereby improving data transmission quality of the remote UE.

According to an eleventh aspect, an embodiment of this application further provides a relay communication method. The method may be applied to second user equipment. For example, the method may be performed by the second user equipment, or a functional module, a chip, or a chip system in the second user equipment. The method may include: The second user equipment broadcasts a discovery message (for example, may be referred to as a discovery message), where the discovery message does not carry an RNTI of the second user equipment; and after the second user equipment is selected by first user equipment as target second user equipment, the RNTI and/or a cell ID of the second user equipment is sent to the first user equipment through a unicast connection.

Based on the method according to the eleventh aspect, relay UE sends the RNTI and/or the cell ID to the first user equipment through the unicast connection. Because information transmitted through the unicast connection can be parsed by only a receive end, a security risk caused to the relay UE due to leakage of a radio network identifier (for example, an RNTI) of the relay UE is avoided, and security of the relay UE is ensured. In addition, target relay UE selected by the remote UE notifies the first user equipment of the RNTI and/or the cell ID of the relay UE, and the first user equipment triggers the network side device to establish the relay path from the remote UE to the target relay UE and then from the target relay UE to the second access network device, to ensure smooth switching from the direct path to the relay path.

According to a twelfth aspect, this application further provides a relay communication method. The method may be applied to a first access network device. For example, the method may be applied to the first access network device, or a functional module, a chip, or a chip system included in the first access network device. The method may include: The first access network device receives an RNTI and/or a cell ID of target second user equipment from first user equipment, and sends, to the second user equipment based on the cell ID of the target second user equipment, a third request that carries the RNTI of the target second user equipment, to request a second access network device to establish a relay path that passes through the target second user equipment. Alternatively, the method may include: The first access network device receives identification information of first user equipment and a cell ID of target second user equipment that are from the first user equipment, and sends, to the second user equipment based on the cell ID of the target second user equipment, a third request that carries the identification information of the first user equipment, to request to establish a relay path for the first user equipment.

Based on the twelfth aspect, not only security in a relay UE discovery process can be ensured, but also smooth switching from a direct path of the first user equipment to the relay path can be ensured, so that the first user equipment performs data transmission with a network side device through the relay path, thereby improving data transmission quality of the first user equipment.

In this embodiment of this application, the second access network device may receive the third request that carries the identification information of the first user equipment and that is from the first access network device, receive a second request that carries the first user equipment and that is from the target second user equipment, perform radio resource control (radio resource control, RRC) connection reconfiguration on the target second user equipment, and send a response to the third request to the first access network device, to trigger the first access network device to perform RRC connection reconfiguration on the first user equipment. Alternatively, the second access network device may receive, from the first access network device, the third request that carries the RNTI of the target second user equipment, perform radio resource control (radio resource control, RRC) connection reconfiguration on the target second user equipment based on the RNTI of the target second user equipment, and send a response to the third request to the first access network device, to trigger the first access network device to perform RRC connection reconfiguration on the first user equipment.

In this way, the second access network device may establish the relay path for the first user equipment in a plurality of manners, thereby improving flexibility of establishing the relay path.

According to a thirteenth aspect, this application provides a communication apparatus. The communication apparatus may be first user equipment or a chip or a chip system in the first user equipment, or may be a functional module that is in the first user equipment and that is configured to implement the method according to any one of the first aspect or the possible designs of the first aspect, or may be a functional module that is in the first user equipment and that is configured to implement the method according to any one of the fourth aspect or the possible designs of the fourth aspect, or may be a functional module that is in the first user equipment and that is configured to implement the method according to any one of the seventh aspect or the possible designs of the seventh aspect, or may be a functional module that is in the first user equipment and that is configured to implement the method according to any one of the tenth aspect or the possible designs of the tenth aspect. The communication apparatus may implement functions performed by the first user equipment in the foregoing aspects or the possible designs, and the functions may be implemented by hardware executing corresponding software. The hardware or the software includes one or more modules corresponding to the functions. For example, the communication apparatus may include a receiving unit, a processing unit, and a sending unit.

In a possible design, the receiving unit is configured to receive an L2 identifier of at least one second user equipment. The sending unit is configured to send first information to a first access network device. The first information may be used by the first access network device to select target second user equipment. For example, the first information may include signal quality of the at least one second user equipment and identification information of the at least one second user equipment (for example, the L2 identifier or a temporary identifier of the second user equipment).

In another possible design, the receiving unit is configured to: receive a discovery message (for example, may be referred to as a discovery message) broadcast by at least one second user equipment, and determine, based on the discovery message, second user equipment that can serve as a relay of the first user equipment. The receiving unit is further configured to obtain an RNTI and/or a cell ID of the second user equipment from the determined second user equipment through a unicast connection. The sending unit is configured to send first information to a first access network device, where the first information may be used by the first access network device to select target second user equipment, for example, the first information may include signal quality of the at least one second user equipment and the RNTI of the at least one second user equipment.

In still another possible design, the receiving unit is configured to receive a discovery message (for example, may be referred to as a discovery message) that is sent by at least one second user equipment and that carries a first identifier. The processing unit is configured to determine, based on the discovery message, second user equipment that can serve as a relay of the first user equipment, and obtain signal quality of the second user equipment based on the discovery message broadcast by the second user equipment. The sending unit is configured to send first information to a first access network device, where the first information may be used by the first access network device to select target second user equipment, for example, the first information may include the signal quality of the at least one second user equipment and the first identifier of the at least one second user equipment. The first identifier is obtained through encryption by using a first algorithm, the first identifier can be parsed by only a network side device, and the first identifier of the second user equipment corresponds to an RNTI of the second user equipment.

In yet another possible design, the receiving unit is configured to receive a discovery message (for example, may be referred to as a discovery message) broadcast by at least one second user equipment. The processing unit is configured to determine, based on the discovery message, second user equipment that can serve as a relay of the first user equipment, obtain signal quality of the second user equipment based on the discovery message broadcast by the second user equipment, and select target second user equipment based on the signal quality of the second user equipment.

The receiving unit is further configured to: obtain an RNTI and/or a cell ID of the target second user equipment from the target second user equipment, control the sending unit to send the RNTI and/or the cell ID of the target second user equipment to a first access network device, to trigger the first access network device to indicate the RNTI of the target second user equipment to a second access network device, so that the second access network device establishes a relay path from the first user equipment to the target second user equipment and then from the target second user equipment to the second access network device.

The receiving unit is further configured to send identification information of the first user equipment to the target second user equipment, to trigger the target second user equipment to send a second request to the second access network device to request the second access network device to establish a relay path for the first user equipment.

Specifically, for an action performed by each unit of the communication apparatus, refer to the descriptions according to any one of the first aspect or the possible designs of the first aspect, any one of the fourth aspect or the possible designs of the fourth aspect, any one of the seventh aspect or the possible designs of the seventh aspect, or any one of the tenth aspect or the possible designs of the tenth aspect. Details are not described again.

According to a fourteenth aspect, a communication apparatus is provided. The communication apparatus may be first user equipment, or a chip or a chip system in the first user equipment. The communication apparatus may implement functions performed by the first user equipment in any one of the first aspect or the possible designs of the first aspect, functions performed by the first user equipment in any one of the fourth aspect or the possible designs of the fourth aspect, functions performed by the first user equipment in any one of the seventh aspect or the possible designs of the seventh aspect, or functions performed by the first user equipment in any one of the tenth aspect or the possible designs of the tenth aspect.

According to a fifteenth aspect, a computer-readable storage medium is provided. The computer-readable storage medium may be a readable nonvolatile storage medium. The computer-readable storage medium stores instructions. When the instructions are run on a computer, the computer is enabled to perform the method according to any one of the first aspect or the possible designs of the first aspect, the method according to any one of the fourth aspect or the possible designs of the fourth aspect, the method according to any one of the seventh aspect or the possible designs of the seventh aspect, or the method according to any one of the tenth aspect or the possible designs of the tenth aspect.

According to a sixteenth aspect, a computer program product including instructions is provided. When the computer program product runs on a computer, the computer is enabled to perform the method according to any one of the first aspect or the possible designs of the first aspect, the method according to any one of the fourth aspect or the possible designs of the fourth aspect, the method according to any one of the seventh aspect or the possible designs of the seventh aspect, or the method according to any one of the tenth aspect or the possible designs of the tenth aspect.

According to a seventeenth aspect, a chip system is provided. The chip system may perform the method according to any one of the first aspect or the possible designs of the first aspect, the method according to any one of the fourth aspect or the possible designs of the fourth aspect, the method according to any one of the seventh aspect or the possible designs of the seventh aspect, or the method according to any one of the tenth aspect or the possible designs of the tenth aspect.

According to an eighteenth aspect, this application provides a communication apparatus. The communication apparatus may be second user equipment or a chip or a chip system in the second user equipment, or may be a functional module that is in the second user equipment and that is configured to implement the method according to any one of the second aspect or the possible designs of the second aspect, or may be a functional module that is in the second user equipment and that is configured to implement the method according to any one of the fifth aspect or the possible designs of the fifth aspect, or may be a functional module that is in the second user equipment and that is configured to implement the method according to any one of the eighth aspect or the possible designs of the eighth aspect, or may be a functional module that is in the second user equipment and that is configured to implement the method according to any one of the eleventh aspect or the possible designs of the eleventh aspect. The communication apparatus may implement functions performed by the second user equipment in the foregoing aspects or the possible designs, and the functions may be implemented by hardware executing corresponding software. The hardware or the software includes one or more modules corresponding to the functions. For example, the communication apparatus may include a processing unit and a sending unit.

In a possible design, the sending unit is configured to: broadcast an L2 identifier of the second user equipment, establish a unicast connection to first user equipment, and provide a relay service for the first user equipment.

In another possible design, the sending unit is configured to broadcast a discovery message (for example, may be referred to as a discovery message). The processing unit is configured to establish a unicast connection to first user equipment. The sending unit is further configured to send an RNTI of relay UE to the first user equipment through the unicast connection, to provide a relay service to the first user equipment.

In still another possible design, the sending unit is configured to broadcast a discovery message (for example, may be referred to as a discovery message), where the discovery message may carry a first identifier of the second user equipment, the first identifier is obtained through encryption by using a first algorithm, the first identifier may be parsed by only a network side device, and the first identifier of the second user equipment corresponds to an RNTI of the second user equipment.

In yet another possible design, the sending unit is configured to broadcast a discovery message (for example, may be referred to as a discovery message), where the discovery message does not carry an RNTI of the second user equipment; and after the second user equipment is selected by first user equipment as target second user equipment, the sending unit is further configured to send the RNTI and/or a cell ID of the second user equipment to the first user equipment through a unicast connection.

Specifically, for an action performed by each unit of the communication apparatus, refer to the descriptions according to any one of the second aspect or the possible designs of the second aspect, any one of the fifth aspect or the possible designs of the fifth aspect, any one of the eighth aspect or the possible designs of the eighth aspect, or any one of the eleventh aspect or the possible designs of the eleventh aspect. Details are not described again.

According to a nineteenth aspect, a communication apparatus is provided. The communication apparatus may be second user equipment, or a chip or a chip system in the second user equipment. The communication apparatus may implement functions performed by the second user equipment in any one of the second aspect or the possible designs of the second aspect, functions performed by the second user equipment in any one of the fifth aspect or the possible designs of the fifth aspect, functions performed by the second user equipment in any one of the eighth aspect or the possible designs of the eighth aspect, or functions performed by the second user equipment in any one of the eleventh aspect or the possible designs of the eleventh aspect.

According to a twentieth aspect, a computer-readable storage medium is provided. The computer-readable storage medium may be a readable nonvolatile storage medium. The computer-readable storage medium stores instructions. When the instructions are run on a computer, the computer is enabled to perform the method according to any one of the second aspect or the possible designs of the second aspect, the method according to any one of the fifth aspect or the possible designs of the fifth aspect, the method according to any one of the eighth aspect or the possible designs of the eighth aspect, or the method according to any one of the eleventh aspect or the possible designs of the eleventh aspect.

According to a twenty-first aspect, a computer program product including instructions is provided. When the computer program product runs on a computer, the computer is enabled to perform the method according to any one of the second aspect or the possible designs of the second aspect, the method according to any one of the fifth aspect or the possible designs of the fifth aspect, the method according to any one of the eighth aspect or the possible designs of the eighth aspect, or the method according to any one of the eleventh aspect or the possible designs of the eleventh aspect.

According to a twenty-second aspect, a chip system is provided. The chip system may perform the method according to any one of the second aspect or the possible designs of the second aspect, the method according to any one of the fifth aspect or the possible designs of the fifth aspect, the method according to any one of the eighth aspect or the possible designs of the eighth aspect, or the method according to any one of the eleventh aspect or the possible designs of the eleventh aspect.

According to a twenty-third aspect, this application provides a communication apparatus. The communication apparatus may be a first access network device or a chip or a chip system in the first access network device, or may be a functional module that is in the first access network device and that is configured to implement the method according to any one of the third aspect or the possible designs of the third aspect, or may be a functional module that is in the first access network device and that is configured to implement the method according to any one of the sixth aspect or the possible designs of the sixth aspect, or may be a functional module that is in the first access network device and that is configured to implement the method according to any one of the ninth aspect or the possible designs of the ninth aspect, or may be a functional module that is in the first access network device and that is configured to implement the method according to any one of the twelfth aspect or the possible designs of the twelfth aspect. The communication apparatus may implement functions performed by the first access network device in the foregoing aspects or the possible designs, and the functions may be implemented by hardware executing corresponding software. The hardware or the software includes one or more modules corresponding to the functions. For example, the communication apparatus may include a receiving unit, a processing unit, and a sending unit.

In a possible design, the receiving unit is configured to receive first information from first user equipment, where the first information may be used by the first access network device to select target second user equipment, for example, the first information may include signal quality of at least one second user equipment and identification information of the at least one second user equipment (for example, an L2 identifier or a temporary identifier of second user equipment). The processing unit is further configured to select the target second user equipment based on the first information. The sending unit is configured to indicate the target second user equipment to the first user equipment, for example, send first indication information to the first user equipment, where the first indication information indicates the target second user equipment, and the first indication information may include identification information of the target second user equipment.

In another possible design, the receiving unit is configured to receive first information from first user equipment, where the first information may be used by the first access network device to select target second user equipment, for example, the first information may include signal quality of at least one second user equipment and an RNTI of the at least one second user equipment. The processing unit is configured to select the target second user equipment based on the first information. The sending unit is configured to indicate the target second user equipment to a second access network device, so that the second access network device establishes a relay path that passes through the target second user equipment.

In still another possible design, the receiving unit is configured to receive first information from first user equipment, where the first information may be used by the first access network device to select target second user equipment, for example, the first information may include signal quality of at least one second user equipment and a first identifier of the at least one second user equipment, the first identifier is obtained through encryption by using a first algorithm, the first identifier may be parsed by only a network side device, and the first identifier of the second user equipment corresponds to an RNTI of the second user equipment. The processing unit is further configured to select the target second user equipment based on the first information. The sending unit is configured to indicate a first identifier of the target second user equipment to a second access network device, so that the second access network device establishes, for the first user equipment, a relay path that passes through the target second user equipment.

In yet another possible design, the receiving unit is configured to receive an RNTI and/or a cell ID of target second user equipment from first user equipment. The sending unit is configured to send, to the second user equipment based on the cell ID of the target second user equipment, a third request that carries the RNTI of the target second user equipment, to request a second access network device to establish a relay path that passes through the target second user equipment.

Specifically, for an action performed by each unit of the communication apparatus, refer to the descriptions according to any one of the third aspect or the possible designs of the third aspect, any one of the sixth aspect or the possible designs of the sixth aspect, any one of the ninth aspect or the possible designs of the ninth aspect, or any one of the twelfth aspect or the possible designs of the twelfth aspect. Details are not described again.

According to a twenty-fourth aspect, a communication apparatus is provided. The communication apparatus may be a first access network device, or a chip or a chip system in the first access network device. The communication apparatus may implement functions performed by the first access network device according to any one of the third aspect or the possible designs of the third aspect, functions performed by the first access network device according to any one of the sixth aspect or the possible designs of the sixth aspect, functions performed by the first access network device according to any one of the ninth aspect or the possible designs of the ninth aspect, or functions performed by the first access network device according to any one of the twelfth aspect or the possible designs of the twelfth aspect.

Functions of the communication apparatus in this embodiment of this application may be implemented by using hardware. In a possible design, the communication apparatus may include a processor and a communication interface. In another possible design, the communication apparatus further includes a memory. The memory is configured to store computer-executable instructions and data that are necessary for the communication apparatus. When the communication apparatus runs, the processor executes the computer-executable instructions stored in the memory, so that the communication apparatus performs the relay communication method according to embodiments of this application.

According to a twenty-fifth aspect, a computer-readable storage medium is provided. The computer-readable storage medium may be a readable nonvolatile storage medium. The computer-readable storage medium stores instructions. When the instructions are run on a computer, the computer is enabled to perform the method according to any one of the third aspect or the possible designs of the third aspect, the method according to any one of the sixth aspect or the possible designs of the sixth aspect, the method according to any one of the ninth aspect or the possible designs of the ninth aspect, or the method according to any one of the twelfth aspect or the possible designs of the twelfth aspect.

According to a twenty-sixth aspect, a computer program product including instructions is provided. When the computer program product runs on a computer, the computer is enabled to perform the method according to any one of the third aspect or the possible designs of the third aspect, the method according to any one of the sixth aspect or the possible designs of the sixth aspect, the method according to any one of the ninth aspect or the possible designs of the ninth aspect, or the method according to any one of the twelfth aspect or the possible designs of the twelfth aspect.

According to a twenty-seventh aspect, a chip system is provided. The chip system may perform the method according to any one of the third aspect or the possible designs of the third aspect, the method according to any one of the sixth aspect or the possible designs of the sixth aspect, the method according to any one of the ninth aspect or the possible designs of the ninth aspect, or the method according to any one of the twelfth aspect or the possible designs of the twelfth aspect.

The chip system in this embodiment of this application may include one or more processors and a communication interface, and may further include one or more memories. The one or more memories are coupled to the one or more processors, the one or more memories are configured to store computer program code, the computer program code includes computer instructions.

According to a twenty-eighth aspect, a relay communication system is provided. The communication system may include the communication apparatus according to the thirteenth aspect or the fourteenth aspect, the communication apparatus according to the eighteenth aspect or the nineteenth aspect, the communication apparatus according to the twenty-third aspect or the twenty-fourth aspect, and a second access network device.

### BRIEF DESCRIPTION OF DRAWINGS

FIG. 1 is a schematic diagram of cellular communication and D2D communication;
FIG. 2 is a schematic diagram of a scenario in which UE is connected to a network via relay UE;
FIG. 3a is a schematic diagram of determining candidate relay UE;
FIG. 3b is a schematic diagram of determining remote UE;
FIG. 4a is a schematic diagram of switching in a same access network device;
FIG. 4b is a schematic diagram of switching in different access network devices;
FIG. 5 is a schematic diagram of a security risk of UE in a communication system;
FIG. 6 is a schematic diagram of a communication system according to an embodiment of this application;
FIG. 7 is a schematic diagram of composition of a communication apparatus 700 according to an embodiment of this application;
FIG. 8A and FIG. 8B are a flowchart of a relay communication method according to an embodiment of this application;
FIG. 9A and FIG. 9B are a flowchart of another relay communication method according to an embodiment of this application;
FIG. 10A and FIG. 10B are a flowchart of still another relay communication method according to an embodiment of this application;
FIG. 11A and FIG. 11B are a flowchart of yet another relay communication method according to an embodiment of this application;
FIG. 12A and FIG. 12B are a flowchart of a still yet another relay communication method according to an embodiment of this application;
FIG. 13A and FIG. 13B are a flowchart of a further relay communication method according to an embodiment of this application;
FIG. 14 is a schematic diagram of composition of a communication apparatus 140 according to an embodiment of this application;
FIG. 15 is a schematic diagram of composition of a communication apparatus 150 according to an embodiment of this application;
FIG. 16 is a schematic diagram of composition of a communication apparatus 160 according to an embodiment of this application; and
FIG. 17 is a schematic diagram of composition of a communication apparatus 170 according to an embodiment of this application.

### DESCRIPTION OF EMBODIMENTS

Before embodiments of this application are described, some terms in embodiments of this application are explained and described. It should be noted that, the following explanations and descriptions are intended to facilitate understanding of embodiments of this application, but should not be construed as limiting the protection scope required by embodiments of this application.

Sidelink (sidelink) communication: Sidelink communication may be direct communication between devices, and data transmitted between the devices does not need to be forwarded by an access network device. Through sidelink communication, a delay of data transmission between the devices can be reduced, and a system capacity based on a cellular network is improved. A link between UEs that perform sidelink communication may be referred to as a sidelink (sidelink, SL) or a direct (direct) link, and an interface corresponding to the link may be referred to as a PC5 interface. Sidelink communication may be applied to a device to device (device to device, D2D) communication scenario. In the D2D communication scenario, sidelink communication may be alternatively described as D2D communication. Sidelink communication may be further applied to a vehicle-to-everything (vehicle-to-everything, V2X) communication scenario. In the V2X communication scenario, sidelink communication may be alternatively described as V2X communication.

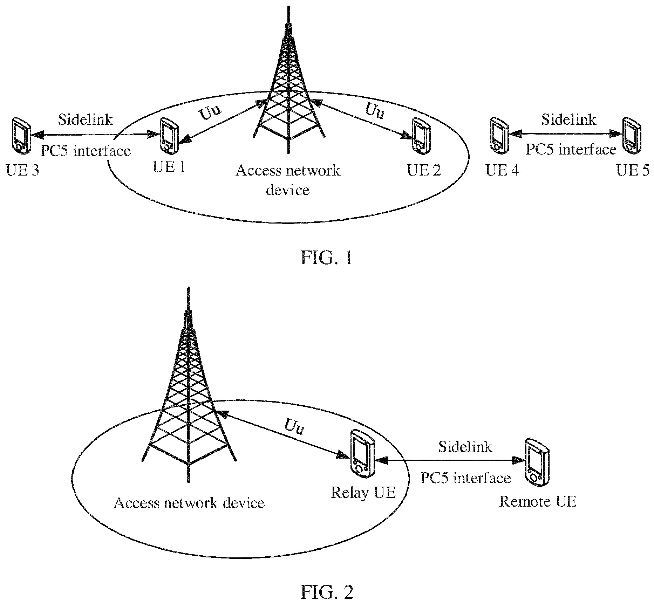

For example, FIG. 1 is a schematic diagram of cellular communication and D2D communication. In FIG. 1, UE 1 and UE 2 are shown, and the UE 1 performs data transmission with the UE 2 via an access network device. An interface corresponding to a communication link between the UE and the access network device may be referred to as a Uu interface or an air interface. In a network architecture based on sidelink communication, UEs may communicate with each other through a sidelink. In this embodiment of this application, the UEs that communicate with each other through the sidelink may be located in a coverage area of the access network device, namely, in an in-coverage (in-coverage) scenario, or may be located outside the coverage area of the access network device, namely, in an out-of-coverage (out-of-coverage) scenario. This is not limited. For example, in FIG. 1, the UE 1 and UE 3 may communicate with each other through a sidelink without using the access network device. The UE 1 may be in the in-coverage scenario. For another example, in FIG. 1, UE 4 and UE 5 may communicate with each other through a sidelink, and both are in the out-of-coverage scenario.

Sidelink communication may support three communication modes: a unicast communication mode, a multicast communication mode, and a broadcast communication mode. The broadcast communication mode may mean that a sender (for example, Tx UE) sends broadcast data without encryption, and the broadcast data may be received and parsed by any interested receiver (for example, Rx UE) within a receiving range. The multicast communication mode may mean that a sender may send multicast data to a receiver that belongs to a multicast group, and a receiver that does not belong to the multicast group cannot receive and parse the multicast data. The unicast communication mode may mean that a unicast connection (for example, a sidelink) is established between a sender and a receiver. After the unicast connection is established, the sender sends unicast data to the receiver through the unicast connection, and only the receiver can receive and parse the unicast data.

To improve performance of data transmission between user equipment and a network side device (for example, the access network device), for example, coverage enhancement and capacity improvement, direct communication between the user equipment and the network side device may be switched to user equipment to network relay (UE to network relay, U2N relay) communication. In this embodiment of this application, U2N relay communication may be referred to as relay communication or indirect (indirect) communication, and a path corresponding to U2N relay communication may be referred to as a relay path or an indirect path. U2N relay communication may mean that one user equipment (for example, user equipment A) communicates with a network side device by using/with the help of another user equipment (for example, user equipment B). The user equipment B may forward data transmitted between the user equipment A and the network side device, and may provide a relay service for the user equipment A. In this case, the user equipment B needs to be within coverage of the access network device, that is, the access network device needs to provide a communication service for the user equipment B. A coverage status of the user equipment A is not limited. The user equipment A may be within the coverage of the access network device, or may be outside the coverage of the access network device. This is not limited.

In this embodiment of this application, user equipment that provides a relay service may be referred to as relay user equipment (relay UE) (or relay UE), and user equipment that communicates with the access network device via the relay user equipment may be referred to as remote user equipment (remote UE) (or remote UE). A sidelink may be established between the relay user equipment and the remote user equipment to perform sidelink communication.

For example, as shown in FIG. 2, an operator may deploy a plurality of UEs, and remote UE may discover, by using a relay discovery (relay discovery) procedure, relay UE that can provide a relay service for the remote UE. The remote UE may establish a sidelink to the relay UE, and send uplink data to the relay UE through the sidelink, and the relay UE sends the uplink data to the access network device. Correspondingly, the access network device may send downlink data to the relay UE, and the relay UE sends the downlink data to the remote UE through the sidelink, to improve data transmission performance. It should be understood that the uplink data may be data sent by the UE to the access network device, and the downlink data may be data sent by the access network device to the UE.

Relay discovery (relay discovery): Relay discovery may be a process in which remote user equipment discovers available relay user equipment around the remote user equipment. Relay discovery may include the following two models: a model A (model A) and a model B. It should be understood that in this application, the model may be alternatively described as a manner. Specifically, the model A is used as an example, relay discovery may include: the relay UE around the remote UE broadcasts a discovery (discovery) message in a broadcast communication mode. The discovery message may be alternatively described as a broadcast message or an announcement (announcement) message, and the discovery message may be used to notify the remote UE that the remote UE is optional relay UE. After monitoring (monitoring)/receiving the discovery message, the remote UE discovers, based on the discovery message, the relay UE that may be connected to the remote UE.

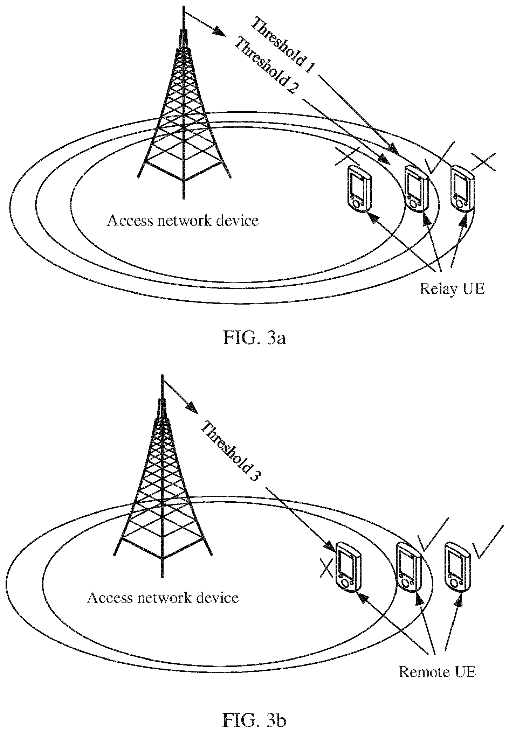

During relay discovery, the remote UE and the relay UE need to meet a specific threshold condition. As shown in FIG. 3a, before performing relay discovery, an access network device broadcasts two thresholds through an air interface: a threshold 1 (thr1) and a threshold 2 (thr2), where thr1<thr2, and thr1 and thr2 are applied to a limitation on relay UE. Only UE whose air interface signal quality is between thr1 and thr2 can serve as relay UE, to help remote UE relay/forward data. As shown in FIG. 3b, an access network device broadcasts a threshold through an air interface: a threshold 3 (thr3), where thr3 is applied to a limitation on remote UE, and only UE whose air interface signal quality is lower than this threshold can serve as remote UE, to search for relay UE for relay.

The foregoing relay discovery (relay discovery) procedure may be applied to any relay UE discovery scenario, for example, may be applied to a scenario in which remote UE is switched from direct communication to relay communication, or may be applied to another scenario. This is not limited. The scenario in which the remote UE is switched from direct communication to relay communication is used as an example. In a case in which the remote UE performs direct communication with the access network device through a Uu interface, when the remote UE determines that the air interface signal quality of the relay UE meets a trigger condition for performing a relay discovery process, for example, when the air interface signal quality of the remote UE is less than the threshold 3, the remote UE discovers surrounding available relay UEs by using the relay discovery process, establishes a sidelink to a relay UE, and communicates with the access network device via the relay UE, to switch direct communication between the remote UE and a network side device to relay communication (or referred to as indirect communication) between the remote UE and the network side device via the relay UE.

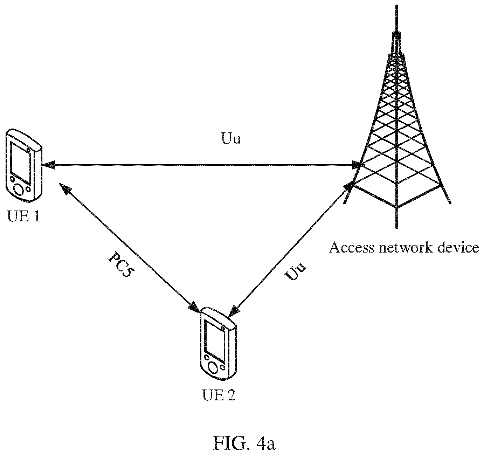

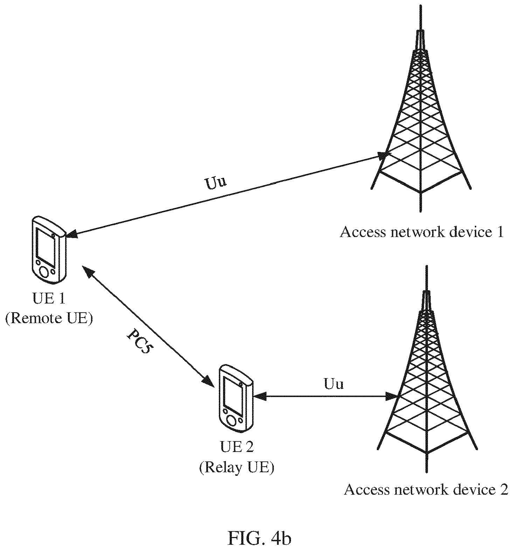

That the remote UE is switched from direct communication to relay communication may include a handover between intra-access network devices shown in FIG. 4a or a handover between inter-access network devices shown in FIG. 4b. The handover between intra-access network devices may mean that an access network device that provides a network service for the remote UE remains unchanged before and after the handover. As shown in FIG. 4a, that UE 1 is connected to an access network device 1 through a Uu interface is switched to that the UE 1 is connected to the access network device 1 through UE 2, where the access network device that provides a network service for the UE 1 remains unchanged. The handover between inter-access network devices includes: An access network device that provides a network service for the remote UE changes before and after the handover. As shown in FIG. 4b, that UE 1 is connected to an access network device 1 through a Uu interface is switched to that the UE 1 is connected to an access network device 2 through UE 2, where the access network device that provides a network service for the UE 1 changes from the access network device 1 to the access network device 2.

In this embodiment of this application, in a scenario in which the remote UE directly communicates with the network side device, an access network device that is directly connected to the remote UE and that provides a communication service for the remote UE may be referred to as a source access network device or a first access network device. After the remote UE is switched from direct communication to relay communication, an access network device that provides a communication service for the remote UE by using relay UE may be referred to as a target access network device or a second access network device.

In a relay discovery process in a scenario in which the remote UE is switched from direct communication to relay communication, a discovery message broadcast by the relay UE in a broadcast communication mode may carry information about the relay UE (for example, an RNTI of the relay UE), to notify the remote UE that the relay UE may serve as relay UE. Further, after the relay UE is selected as UE for providing a relay service for the remote UE, the network side device obtains related information of the relay UE based on the RNTI of the relay UE, and configures a relay path from the remote UE to the relay UE and then from the relay UE to the network side device based on the related information of the UE.

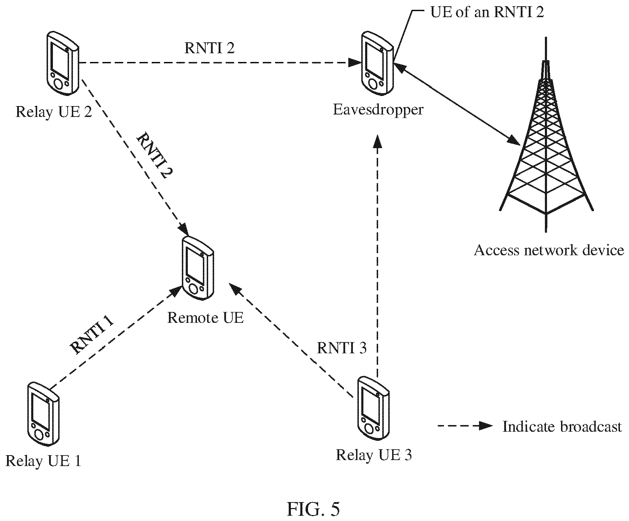

In the broadcast communication mode, the relay UE sends the RNTI of the relay UE to the outside without performing encryption processing. As a result, the RNTI of the relay UE may be received and parsed by any interested device in a receiving range, and some important information of the UE is obtained based on the RNTI of the relay UE. For example, as shown in FIG. 5, if a malicious eavesdropper (eavesdropper) exists in a network, the eavesdropper disguises itself as surrounding relay UE based on an RNTI broadcast by the surrounding relay UE, and deceives an access network device into exchanging information with the access network device, to obtain some important information of the relay UE. This brings a great security risk to the relay UE.

To resolve a problem that a security risk is caused to relay UE because an RNTI of the relay UE is broadcast in a relay discovery process, the following solutions are provided in embodiments of this application. In the following manner, second user equipment may be alternatively described as relay UE, first user equipment may be alternatively described as remote UE, a first access network device may be alternatively described as a source access network device, and a second access network device may be alternatively described as a target access network device. This is not limited.

Manner 1: In the relay discovery process, the second user equipment sends, in a broadcast communication manner, a discovery message that carries an L2 identifier of the relay UE, where the discovery message does not carry an RNTI of the second user equipment. The first user equipment receives the discovery message, and discovers, based on the received discovery message, the second user equipment that can serve as a relay of the first user equipment and that can serve as a relay.

To switch a direct path between the second user equipment and a network side device to a relay path, the first user equipment may further measure the received discovery message to obtain signal quality of the second user equipment, add the L2 identifier (or a temporary identifier) of the second user equipment and the signal quality of the second user equipment to first information, and report the first information to the first access network device, so that the first access network device selects target second user equipment based on the first information. The first access network device triggers the second access network device to establish a relay path that passes through the target second user equipment, or the first access network device indicates the selected target second user equipment to the first user equipment, and the first user equipment triggers the target second user equipment to send a request to the second access network device, to request the second access network device to establish, for the first user equipment, a relay path that passes through the target second user equipment.

In this way, in the relay discovery process, the second user equipment broadcasts information (for example, an L2 identifier) that is used only for an SL. Because the L2 identifier does not relate to cell radio network identifier information (for example, an RNTI) of the second user equipment, a base station cannot identify, based on only the L2 identifier, which second user equipment in a cell is. Therefore, even if the L2 identifier is obtained by a malicious eavesdropper, related information of the second user equipment cannot be obtained from the base station side. Therefore, no security risk is brought to the second user equipment.

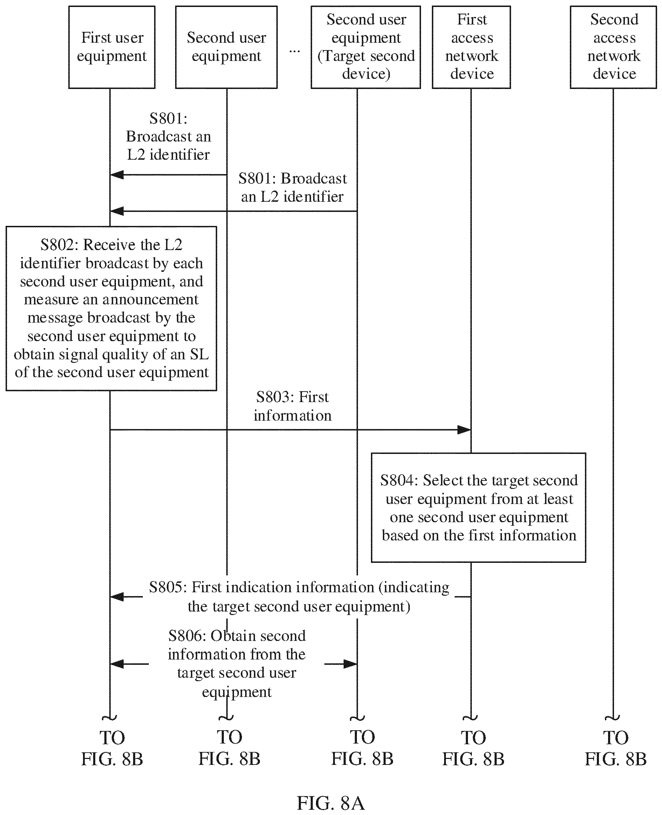

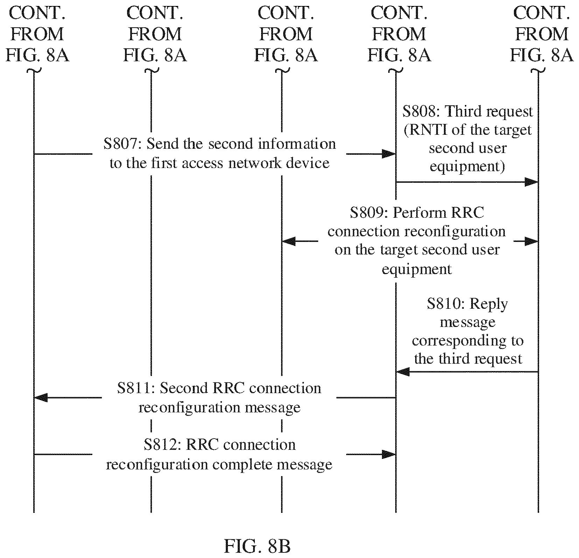

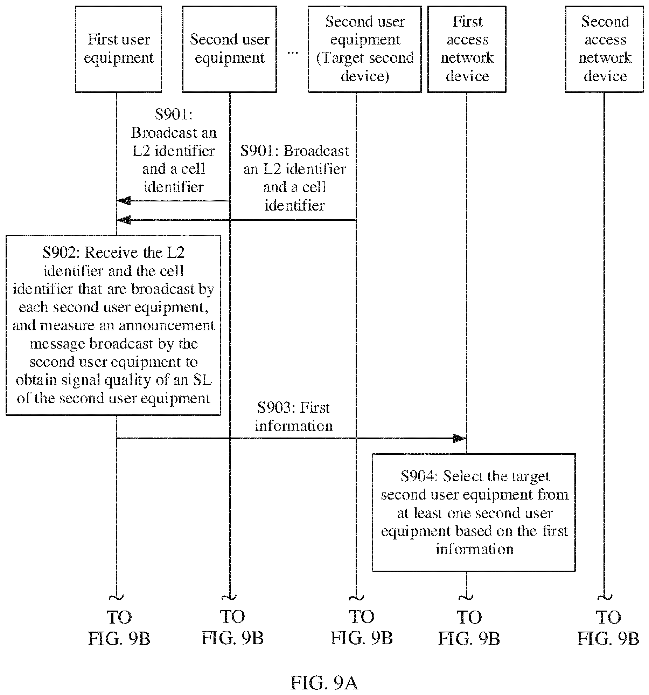

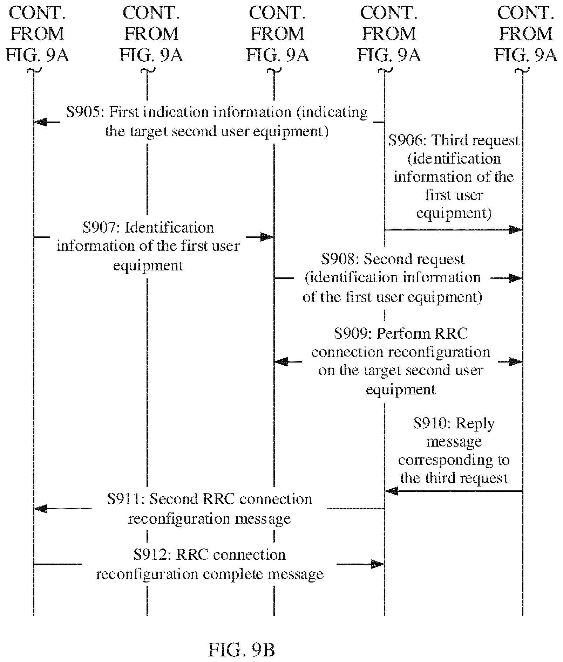

Specifically, for an execution process of Manner 1, refer to descriptions in an embodiment corresponding to FIG. 8A and FIG. 8B or FIG. 9A and FIG. 9B.

Manner 2: In the relay discovery process, the second user equipment broadcasts a discovery message in a broadcast communication manner, where the discovery message does not carry an RNTI of the second user equipment. The first user equipment receives the discovery message, and discovers, based on the received discovery message, the second user equipment that can serve as a relay of the first user equipment and that can serve as a relay.

To switch a direct path between the second user equipment and a network side device to a relay path, the first user equipment may further measure the received discovery message to obtain signal quality of the second user equipment, establish a unicast connection to the second user equipment discovered by the first user equipment, obtain an RNTI of the second user equipment through the unicast connection, add the obtained RNTI and the signal quality of the second user equipment to first information, and report the first information to the first access network device, so that the first access network device selects target second user equipment based on the first information, and indicates an RNTI of the target second user equipment to the second access network device. In this way, the second access network device performs radio resource control (radio resource control, RRC) connection reconfiguration on the target second user equipment based on the RNTI of the target second user equipment, and establishes a relay path from the first user equipment to the target second user equipment and then from the target second user equipment to the second access network device.

Therefore, in the relay discovery process, the second user equipment sends the RNTI of the relay UE through the unicast connection. Because information transmitted through the unicast connection can be received and parsed by only a receive end, a malicious eavesdropper cannot obtain the RNTI of the second user equipment, to avoid a security risk caused to the second user equipment.

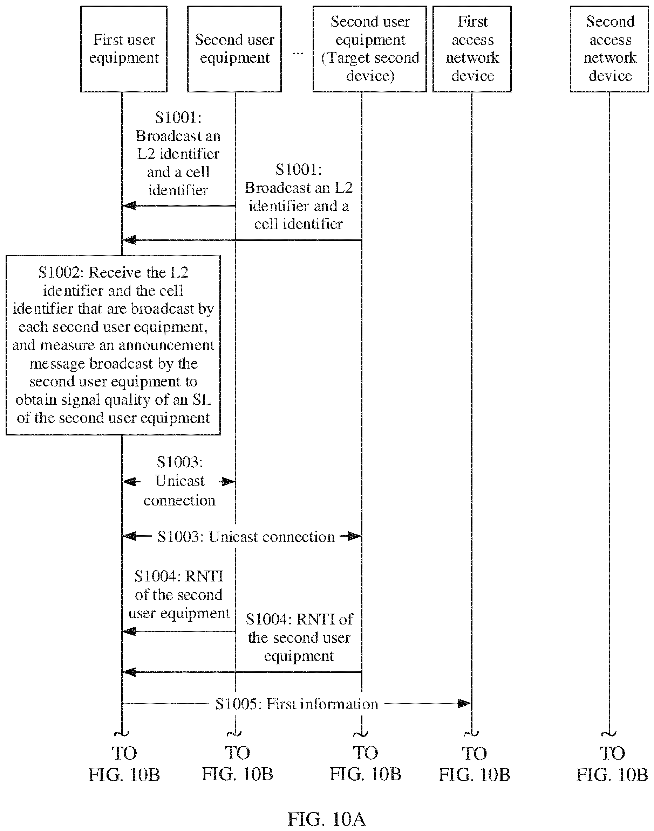

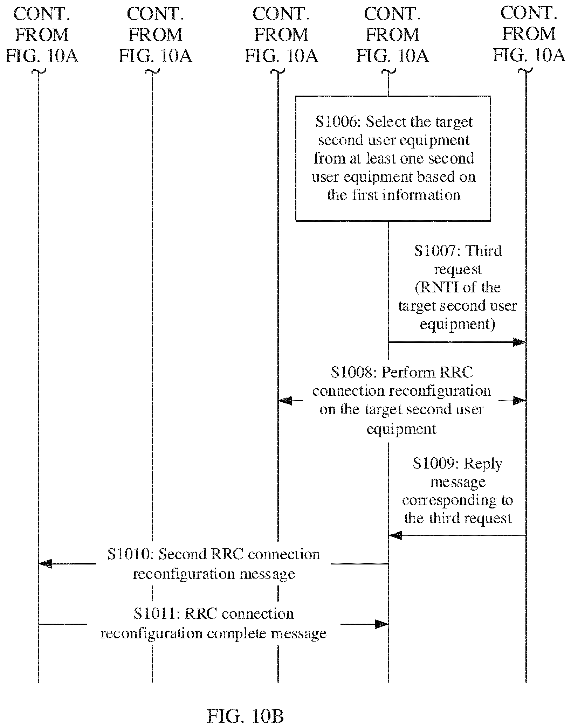

Specifically, for Manner 2, refer to descriptions in an embodiment corresponding to FIG. 10A and FIG. 10B.

Manner 3: In the relay discovery process, the second user equipment broadcasts a discovery message in a broadcast communication manner, where the discovery message carries a first identifier of the relay UE, the first identifier is obtained through encryption by using a first algorithm, for example, is obtained by encrypting an RNTI of the second user equipment by using the first algorithm, and the first identifier can be parsed by only the network side device. For example, only the second access network device can parse the first identifier to obtain the RNTI of the second user equipment. Correspondingly, the first user equipment receives the discovery message, and discovers, based on the received discovery message, the second user equipment that can perform relay for the first user equipment and that can serve as a relay.

To switch a direct path between the second user equipment and a network side device to a relay path, the first user equipment may further measure the received discovery message to obtain signal quality of the second user equipment, add a first identifier of the second user equipment and the signal quality of the second user equipment to first information, and report the first information to the first access network device. The first access network device selects target second user equipment based on the first information, and sends the first identifier of the target second user equipment to the second access network device, so that the second access network decrypts the first identifier of the target second user equipment to obtain an RNTI of the target second user equipment, performs RRC connection reconfiguration on the target second user equipment based on the RNTI of the target second user equipment, and establishes a relay path from the first user equipment to the target second user equipment and then from the target second user equipment to the second access network device.

In this way, in the relay discovery process, the second user equipment broadcasts an identifier that can be identified by only the network side device. In this case, even if the identifier is obtained by a malicious eavesdropper, the eavesdropper cannot parse the identifier to obtain identification information of the second user equipment, and no security risk is caused to the second user equipment, thereby ensuring security in the relay UE discovery process.

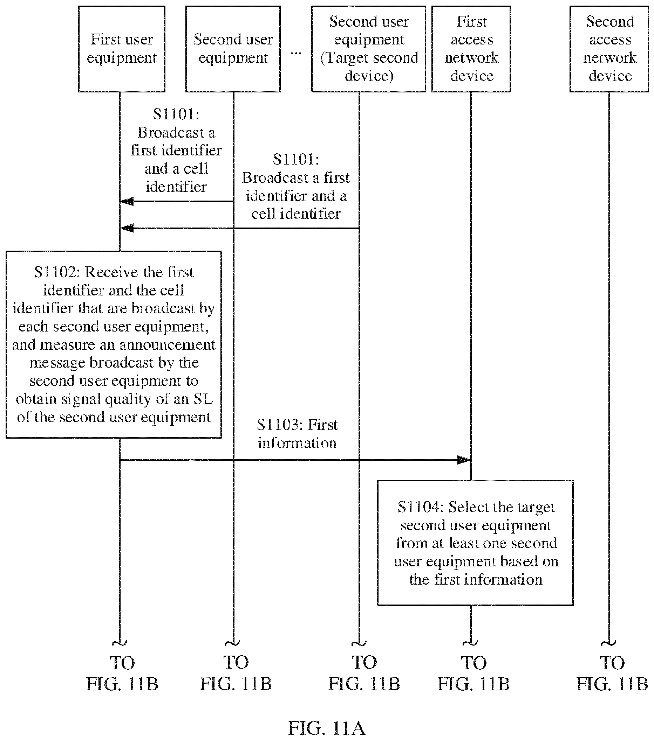

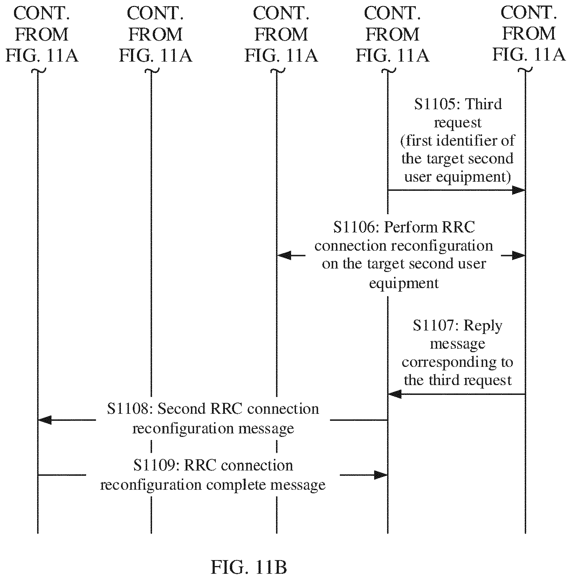

Specifically, for the method in Manner 3, refer to descriptions in an embodiment corresponding to FIG. 11A and FIG. 11B.

Manner 4: In the relay discovery process, the second user equipment broadcasts a discovery message in a broadcast communication manner, where the discovery message does not carry an RNTI of the second user equipment. The first user equipment receives the discovery message, and discovers, based on the received discovery message, the second user equipment that can serve as a relay of the first user equipment and that can serve as a relay.

To switch a direct path between the second user equipment and a network side device to a relay path, the first user equipment may further measure the received discovery message to obtain signal quality of the second user equipment, and select target second user equipment based on the signal quality of the second user equipment. The first user equipment obtains an RNTI of the target second user equipment through a unicast connection, and indicates the RNTI of the target second user equipment to the first access network device, so that the first access network device triggers the second access network device to establish a relay path that passes through the target second user equipment, or the first user equipment triggers the target second user equipment to send a request to the second access network device, to request the second access network device to establish, for the first user equipment, a relay path that passes through the target second user equipment.

For example, in the relay discovery process, after the second user equipment is selected by the first user equipment as the target second user equipment, the second user equipment sends the RNTI of the relay UE through the unicast connection. Because information transmitted through the unicast connection can be received and parsed by only a receive end, a malicious eavesdropper cannot obtain the RNTI of the second user equipment, thereby avoiding a security risk to the second user equipment and ensuring security in the relay UE discovery process.

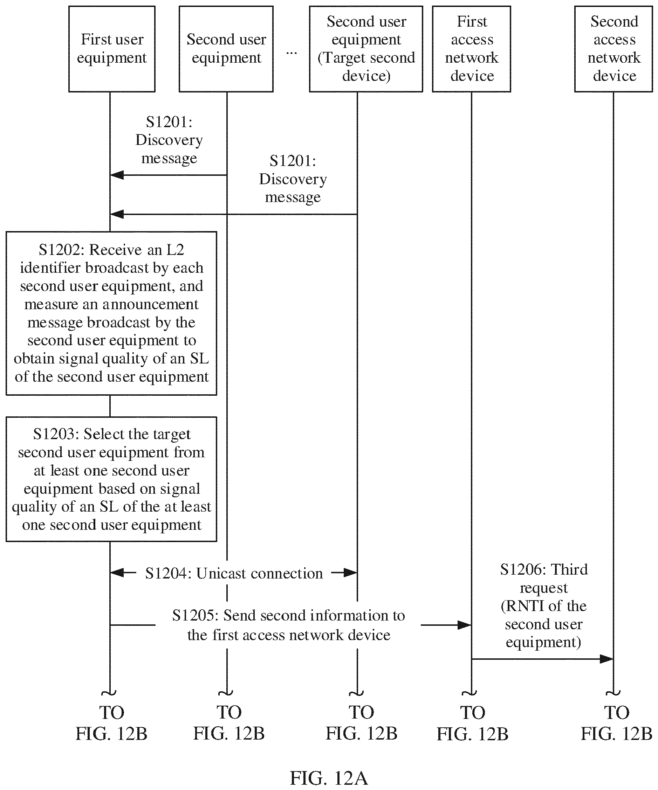

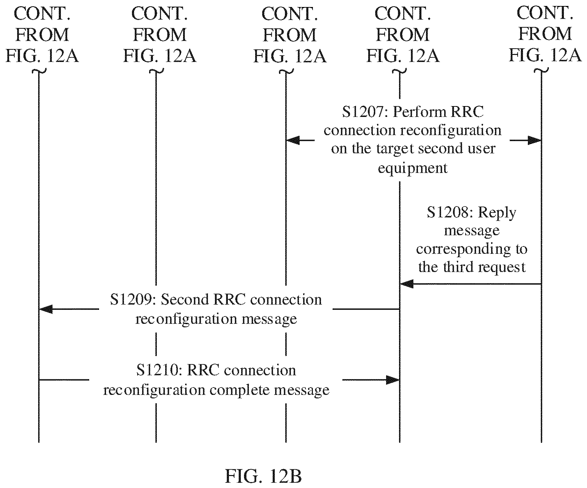

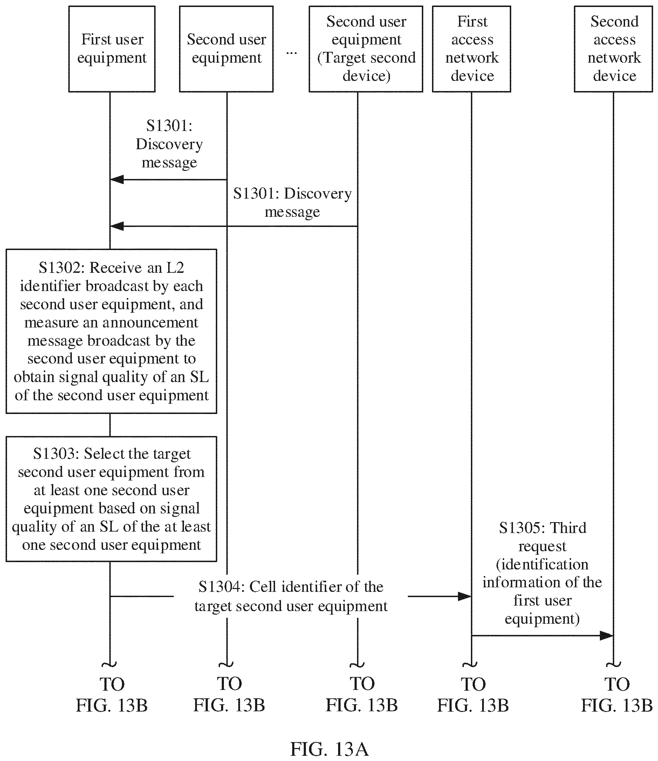

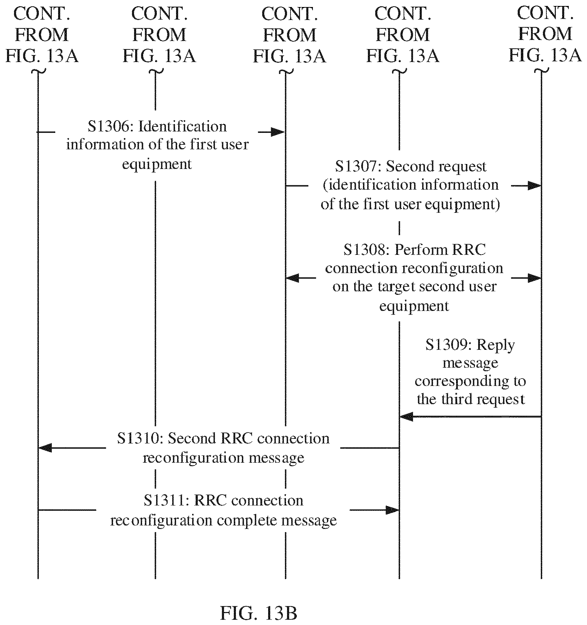

Specifically, for the method in Manner 4, refer to descriptions in an embodiment corresponding to FIG. 12A and FIG. 12B or FIG. 13A and FIG. 13B.

It should be understood that this application is not limited to naming of the L2 identifier and the first identifier. The L2 identifier may be alternatively described as a link number, an SL identifier, another identifier that can indicate an SL between the first user equipment and the second user equipment, or the like. The first identifier may be alternatively described as a network identifier, a new identifier (new ID), or the like. In addition, the L2 identifier may be alternatively replaced with a second identifier. The second identifier may be secure identification information, and is different from an RNTI of user equipment. Even if the second identifier is disclosed, no security risk is caused to the user equipment, and security in a relay UE discovery process is ensured.

With reference to the accompanying drawings in this specification, the following describes a relay communication method provided in embodiment of this application by using an example in which remote UE is switched from direct communication to relay communication. It should be understood that the relay method described in embodiments of this application is not only applicable to a scenario in which the remote UE is switched from direct communication to relay communication, but also applicable to another scenario, to resolve a security problem of UE because the UE broadcasts identification information of relay UE in a relay discovery process in the another scenario.

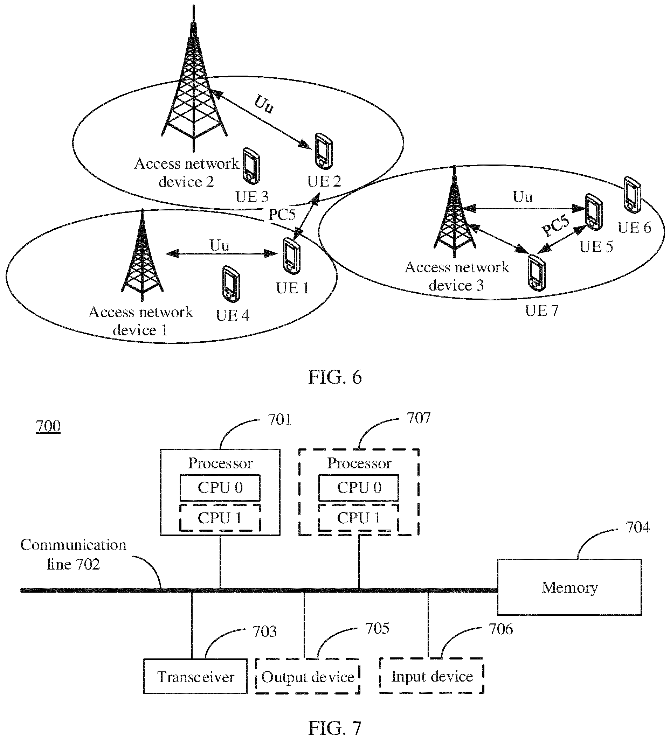

The relay communication method provided in embodiments of this application may be applied to a communication system that supports coordinated communication between UEs, for example, may be applied to any one of a 4th generation (4^{th} generation, 4G) system, a long term evolution (long term evolution, LTE) system, a 5th generation (5th generation, 5G) system, a new radio (new radio, NR) system, or an NR-vehicle-to-everything (vehicle-to-everything, V2X) system, may be further applied to another next-generation communication system, and the like. This is not limited. The following uses a communication system shown in FIG. 6 as an example to describe the method provided in embodiments of this application.

FIG. 6 is a schematic diagram of a communication system according to an embodiment of this application. As shown in FIG. 6, the communication system may include a plurality of access network devices and a plurality of UEs. The plurality of UEs may communicate with each other through collaboration. The plurality of UEs may include remote UE and relay UE. The relay UE is located in coverage of the access network device, establishes a wireless connection to the access network device, and communicates with the access network device through an air interface. Alternatively, the remote UE may be located in coverage of the access network device, establishes a wireless connection to the access network device, and directly communicates with the access network device through an air interface, that is, performs direct (direct) communication. Alternatively, the remote UE may establish an SL connection to the relay UE, and communicates with the access network device via the relay UE, that is, performs indirect (indirect) communication. In this case, the remote UE is connected to the relay UE through a sidelink, and the relay UE is connected to the access network device through a Uu link. For example, the remote UE may send uplink data to the relay UE through the SL. After receiving the uplink data, the relay UE sends the uplink data to the access network device through the Uu link. The access network device may send downlink data to the relay UE. After receiving the downlink data, the relay UE sends the downlink data to the remote UE through the SL. When Uu link quality of the remote UE changes and a path switching condition is met, switching between direct communication and indirect communication may occur.

The access network device is mainly configured to implement functions such as a physical layer function, resource scheduling and management, access control of user equipment, and mobility management. The access network device may be a device supporting wired access, or may be a device supporting wireless access. For example, the access network device may be an access network (access network, AN)/a radio access network (radio access network, RAN), where the AN/RAN includes a plurality of 5G-AN/5G-RAN nodes. The 5G-AN/5G-RAN node may be an access point (access point, AP), a NodeB (NodeB, NB), an enhanced NodeB (enhance NodeB, eNB), a next-generation NodeB (NR NodeB, gNB), a transmission reception point (transmission reception point, TRP), a transmission point (transmission point, TP), another access node, or the like. In embodiments of this application, an apparatus configured to implement a function of an access network device may be an access network device, or may be an apparatus that can support the access network device in implementing the function, for example, a chip system or another functional module. This is not limited. In embodiments of this application, that the apparatus configured to implement the function of the access network device is the access network device is used for description.

User equipment may be terminal equipment (terminal equipment), a mobile station (mobile station, MS), a mobile terminal (mobile terminal, MT), or the like. Specifically, the UE may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In embodiments of this application, an apparatus configured to implement a function of the UE (for example, remote UE or relay UE) may be the UE, or may be an apparatus that can support the UE in implementing the function, for example, a chip system or a functional module. This is not limited. In this application, that the apparatus configured to implement the function of the UE is the UE is used for description.

It should be noted that FIG. 6 is merely an example accompanying diagram, a quantity of nodes included in FIG. 6 is not limited. In addition to functional nodes shown in FIG. 6, the communication system may further include another node, for example, a core network device, a gateway device, or an application server. This is not limited.

Network elements shown in FIG. 6, such as the UE and the access network device, may use a composition structure shown in FIG. 7 or include components shown in FIG. 7. FIG. 7 is a schematic diagram of composition of a communication apparatus 700 according to an embodiment of this application. For example, when the communication apparatus 700 has a function of the access network device in embodiments of this application, the communication apparatus 700 may be an access network device, or a chip or a chip system in the access network device. When the communication apparatus 700 has a function of the user equipment (for example, the first user equipment or the second user equipment) described in embodiments of this application, the communication apparatus 700 may be user equipment or a chip or a chip system in the user equipment.

As shown in FIG. 7, the communication apparatus 700 may include a processor 701, a communication line 702, and a transceiver 703. Optionally, the communication apparatus 700 may further include a memory 704. The processor 701, the memory 704, and the transceiver 703 may be connected through the communication line 702.

The processor 701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 701 may alternatively be another apparatus having a processing function, for example, a circuit, a component, or a software module.

The communication line 702 is configured to transmit information between components included in the communication apparatus 700.

The transceiver 703 is configured to communicate with another device or another communication network. The another communication network may be an Ethernet, a radio access network (radio access network, RAN), a wireless local area network (wireless local area network, WLAN), or the like. The transceiver 703 may be a radio frequency module or any apparatus that can implement communication. In this embodiment of this application, an example in which the transceiver 703 is the radio frequency module is merely used for description. The radio frequency module may include an antenna, a radio frequency circuit, and the like. The radio frequency circuit may include a radio frequency integrated chip, a power amplifier, and the like.

The memory 704 is configured to store instructions. The instruction may be a computer program.

The memory 704 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 704 may be independent of the processor 701, or may be integrated with the processor 701. The memory 704 may be configured to store instructions, program code, data, or the like. The memory 704 may be located inside the communication apparatus 700, or may be located outside the communication apparatus 700. This is not limited. The processor 701 is configured to execute the instructions stored in the memory 704, to implement a relay communication method provided in the following embodiments of this application.

In an example, the processor 701 may include one or more CPUs, for example, a CPU 0 and a CPU 1 in FIG. 7.

In an optional implementation, the communication apparatus 700 may include a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device, such as a keyboard, a mouse, a microphone, or a joystick, and the output device 705 is device, such as a display or a speaker (speaker).

It should be noted that the communication apparatus 700 may be a desktop computer, a portable computer, a network server, a mobile phone, a tablet computer, wireless user equipment, an embedded device, a chip system, or a device having a structure similar to that in FIG. 7. In addition, a composition structure shown in FIG. 7 does not constitute a limitation on the communication apparatus. In addition to the components shown in FIG. 7, the communication apparatus may include more or fewer components than those shown in the figure, or some components may be combined, or different component arrangements may be used.

In this embodiment of this application, the chip system may include a chip, or may include a chip and another discrete component.

The following describes the relay communication method provided in embodiments of this application based on the communication system shown in FIG. 6. Each device in the following embodiments may have the components shown in FIG. 7. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

FIG. 8A and FIG. 8B show a relay communication method according to an embodiment of this application. In the relay communication method, second user equipment (such as relay UE) broadcasts an L2 identifier of the relay UE in a relay discovery process. As shown in FIG. 8A and FIG. 8B, the method may include the following steps.

S801: At least one second user equipment broadcasts a discovery message, where the discovery message carries an L2 identifier of the second user equipment.

The second user equipment may be candidate relay UE, the second user equipment has a capability of providing a relay service for another user equipment (for example, first user equipment), and the second user equipment is user equipment that is authorized by a network and that can be used for relay. The second user equipment may be alternatively described as the relay UE. The second user equipment may have established a unicast connection to the first user equipment, or may not establish a unicast connection to the first user equipment. This is not limited. For example, the second user equipment may be UE 2, UE 3, UE 4, or the like in FIG. 6. It should be understood that a quantity of second user equipments is not limited in this application, and may be two, or may be three or more.

The L2 identifier of the second user equipment does not belong to identification information of the second user equipment in a cell, an application scope of the L2 identifier of the second user equipment is an SL of the second user equipment, and the L2 identifier of the second user equipment may be used to identify a sidelink between the second user equipment and the first user equipment. The L2 identifier of the second user equipment may be temporary ID information allocated by the second user equipment to the second user equipment.

The discovery (discovery) message may be alternatively described as an announcement (announcement) message or a broadcast message. The second user equipment may broadcast the discovery message in a broadcast communication manner. In addition to the L2 identifier, the discovery message may further carry other information of the second user equipment, for example, may carry a cell identifier (cell ID), an application layer user identifier (application user ID), or an application identifier (application Code) of the second user equipment. The cell ID of the second user equipment may be used to identify a cell in which the second user equipment is located.

It should be understood that this application is not limited to that the second user equipment broadcasts the L2 identifier of the relay UE. Alternatively, the second user equipment may broadcast another identifier. The identifier does not relate to identification information (such as an RNTI) of the second user equipment. For the second user equipment, the identifier is secure. Even if the identifier is leaked, no security risk is caused to the second user equipment, and security in a relay UE discovery process is ensured.

For example, execution of S801 is conditional. For example, the second user equipment may determine, based on a threshold 1, a threshold 2, and air interface signal quality of the second user equipment, whether the second user equipment has a capability of providing a relay service for another UE. If the air interface signal quality of the second user equipment falls within [threshold 1, threshold 2], it indicates that the second user equipment has the capability of providing a relay service for another UE, and may broadcast the L2 identifier of the relay UE; on the contrary, if the air interface signal quality of the second user equipment does not fall within [threshold 1, threshold 2], it indicates that the second user equipment does not have the capability of providing a relay service for another UE, and S801 is not performed.

The air interface signal quality of the second user equipment in this embodiment of this application may be signal quality of a Uu interface between the second user equipment and an access network device that provides a network service for the second user equipment. The signal quality of the Uu interface between the second user equipment and the access network device may include but is not limited to reference signal received power (reference signal received power, RSRP), reference signal received quality (reference signal received quality, RSRQ), a signal to interference plus noise ratio (signal to interference plus noise ratio, SINR), or a received signal strength indication (received signal strength indication, RSSI) of the Uu interface. In this embodiment of this application, the second user equipment may be located in a coverage area of a first access network device, and the first access network device provides a network service for the second user equipment; or the second user equipment may be located in a coverage area of a second access network device, and the second access network device provides a network service for the second user equipment. This is not limited.

As described above, the threshold 1 and the threshold 2 may be broadcast by the access network device that provides a network service for the second user equipment to the second user equipment through an air interface. After receiving the threshold 1 and the threshold 2, the second user equipment may compare the threshold 1, the threshold 2, and the air interface signal quality of the second user equipment, to determine whether the second user equipment has a capability of providing a relay service for another UE. If the second user equipment has the capability, S801 is performed.

S802: The first user equipment receives the discovery message broadcast by the at least one second user equipment, and measures the discovery message sent by the second user equipment, to obtain signal quality of the second user equipment.

The first user equipment may be user equipment whose air interface signal quality is relatively poor and that needs to find another user equipment to provide a relay service for the first user equipment. For example, the first user equipment may be UE 1 in FIG. 6 or UE 5 in FIG. 6. Alternatively, the first user equipment may be a user equipment outside a coverage area of the cell.

The signal quality of the second user equipment may include signal quality of an SL of the second user equipment or signal quality of the discovery message broadcast by the second user equipment. The SL of the second user equipment may indicate an SL between the second user equipment and the first user equipment, or the SL of the second user equipment may be an SL between the second user equipment and the first user equipment. The signal quality of the second user equipment may include but is not limited to RSRP, RSRQ, an SINR, or an RSSI. The first user equipment may measure the received discovery message to obtain signal quality corresponding to the discovery message, and use the signal quality corresponding to the discovery message as the signal quality of the second user equipment.

For example, execution of S802 is conditional. For example, the first user equipment may determine whether the air interface signal quality of the first user equipment is less than a threshold 3. If the air interface signal quality of the first user equipment is less than the threshold 3, it indicates that quality of an air interface between the first user equipment and the first access network device is relatively poor, data transmission through the air interface is not suitable, and the relay UE needs to be used to relay data, to determine a relay discovery process to be performed. If the air interface signal quality of the first user equipment is greater than or equal to the threshold 3, it indicates that the quality of the air interface between the first user equipment and the access network device is relatively good, data may be directly transmitted to the first access network device through the air interface, and the relay discovery process is not performed.

The air interface signal quality of the first user equipment in this embodiment of this application may be signal quality of a Uu interface between the first user equipment and the first access network device. The signal quality of the Uu interface between the first user equipment and the first access network device may include but is not limited to RSRP, RSRQ, an SINR, an RSSI, or the like of the Uu interface.

The threshold 3 is described above. The threshold 3 may be broadcast by the first access network device to the first user equipment through the air interface. After receiving the threshold 3, the first user equipment may compare the threshold 3 with the air interface signal quality of the first user equipment, to determine whether the first user equipment performs the relay discovery process.

It should be noted that, in S802, the first user equipment receives the discovery message of surrounding second user equipment, uses the signal quality of the discovery message as the signal quality of the second user equipment by measuring the signal quality of the discovery message, determines whether the second user equipment can serve as a relay, and uploads, in S803, related information of the second user equipment that can serve as a relay.

Optionally, a manner of determining whether the second user equipment can serve as a relay is as follows.

Manner 1: The second user equipment adds, to the discovery message, specific indication information indicating whether the relay service can be provided, for example, a preset group identifier (group ID) in a network. After receiving the discovery message, the first user equipment determines, based on the group ID information included in the discovery message, whether the second user equipment can serve as the relay of the first user equipment to provide a relay service for the first user equipment.

Manner 2: The second user equipment adds, to the discovery message, specific indication information indicating whether a relay service or an application can be provided, for example, service information (service information) or application information (application information) indicating that a relay can be provided. After receiving the discovery message, the first user equipment determines a service or application requirement of the second user equipment based on the service information or the application information carried in the discovery message, and determines, based on the service or application requirement of the second user equipment, whether the second user equipment can serve as a relay of the first user equipment to provide a relay service for the first user equipment.

For example, in S801, three UEs, namely, the UE 2, the UE 3, and the UE 4, each broadcast a discovery message. After receiving the discovery message, the UE 1 learns, by reading the discovery message, that only the UE 2 and the UE 3 are configured to provide a relay service for the UE 1, and therefore, the UE 1 reports related information of the UE 2 and the UE 3 in S803.

S803: The first user equipment sends first information to the first access network device. Correspondingly, the first access network device receives the first information.

The first access network device provides a network service for the first user equipment. For example, as shown in FIG. 6, it is assumed that the first user equipment is the UE 1, and the first access network device may be the access network device 1. For another example, as shown in FIG. 6, it is assumed that the first user equipment is the UE 5, and the first access network device may be the access network device 3.

The first information may be alternatively described as a measurement report, and the first information may indicate the at least one second user equipment and signal quality of each second user equipment. Specifically, the first information may include but is not limited to signal quality of the at least one second user equipment and the L2 identifier of the at least one second user equipment; or the first information may include but is not limited to a temporary identifier of the at least one second user equipment and the signal quality of the at least one second user equipment. There is a mapping relationship between the temporary identifier of the second user equipment and the L2 identifier of the second user equipment. The temporary identifier of the second user equipment may be allocated by the first user equipment, and the temporary identifier of the second user equipment may be obtained based on the L2 identifier of the second user equipment. In addition, if the second user equipment further broadcasts a cell ID of the relay UE in S801, the first information may further include the cell ID of the at least one second user equipment.

It should be understood that the signal quality of the second user equipment and the L2 identifier of the second user equipment may be correspondingly included in the first information. For example, the signal quality of the second user equipment and the L2 identifier of the second user equipment may be correspondingly included in the first information in an array form, or may be included in the first information in a table form. This is not limited. The array form is used as an example. It is assumed that the second user equipment includes UE 1, UE 2, and UE 3, and L2 identifiers of the three second user equipments are respectively L2 ID 1, L2 ID 2, and L2 ID 3. The first information may be {L2 ID 1, signal quality of the UE 1}, {L2 ID 2, signal quality of the UE 2}, and {L2 ID 3, signal quality of the UE 3}.

S804: The first access network device selects target second user equipment from the at least one second user equipment based on the first information.

The target second user equipment may be the second user equipment that provides a relay service for the first user equipment.

For example, the first access network device may select the target second user equipment based on the signal quality of the at least one second user equipment. For example, second user equipment with highest signal quality in the at least one second user equipment may serve as the target second user equipment; or second user equipment with best air interface signal quality in a plurality of second user equipments with relatively high signal quality is used as the target second user equipment.

It should be understood that this application is not limited to selecting the target second user equipment based on the signal quality of the at least one second user equipment. Alternatively, the target second user equipment may be selected based on the signal quality of the at least one second user equipment and other auxiliary information (for example, a load status of the second user equipment). This is not limited.

S805: The first access network device sends first indication information to the first user equipment. Correspondingly, the first user equipment receives the first indication information.

The first indication information may indicate the target second user equipment. Specifically, the first indication information may include an L2 identifier of the target second user equipment, another identifier corresponding to the L2 identifier of the target second user equipment, or the like.

S806: The first user equipment obtains second information from the target second user equipment based on the first indication information.

The second information may indicate an RNTI of the target second user equipment and a cell in which the target second user equipment is located. Specifically, the second information may include the RNTI of the target second user equipment and a cell ID of the target second user equipment. It should be noted that, if the second user equipment broadcasts the cell ID of the second user equipment in S801, the second information in S806 may not include the cell ID of the target second user equipment; or if the second user equipment does not broadcast the cell ID of the second user equipment in S801, the second information in S806 includes the cell ID of the target second user equipment.

The RNTI of the target second user equipment may be an identity of the target relay device. The RNTI of the target second user equipment may be used to uniquely identify the target second user equipment. The RNTI of the target second user equipment may be configured by a network side device for the target second user equipment. The RNTI of the target second user equipment may also be referred to as a radio access network identifier (radio access network identifier, RAN ID). The RNTI of the target second user equipment may include an inactive radio network temporary identifier (inactive radio network temporary identifier, I-RNTI) or a cell radio network temporary identifier (cell radio network temporary identifier, C-RNTI). For example, when the target second user equipment is in an inactive state, the RNTI of the target second user equipment may be the I-RNTI. When the target second user equipment is in an RRC connected state, the RNTI of the target second user equipment may be the C-RNTI. When the target second user equipment is in an idle state, the RNTI of the target second user equipment may be an S-TMSI.

For example, the first user equipment may establish a unicast connection to the target second user equipment based on the first indication information, and obtain the second information from the target second user equipment through the unicast connection. Because information transmitted through the unicast connection can be parsed by only a receive end, security of transmission of the second information can be ensured.

It should be noted that the first user equipment establishes a unicast connection to the target second user equipment based on the first indication information is an optional step. For example, if the first user equipment has established a unicast connection to the target second user equipment before S806, the first user equipment may obtain the second information from the target second user equipment through the unicast connection based on the first indication information. On the contrary, if the first user equipment has not established a unicast connection to the target second user equipment, the first user equipment may first establish a unicast connection, and then obtain the second information from the target second user equipment through the unicast connection.

In this embodiment of this application, that the first user equipment establishes the unicast connection to the target second user equipment may include: For example, after receiving the first indication information, the first user equipment correspondingly stores the L2 identifier of the target second user equipment, and may send, to the target second user equipment, a unicast connection establishment request message whose source address is the L2 identifier of the first user equipment and whose destination address is the L2 identifier of the target second user equipment, to request the target second user equipment to establish the unicast connection to the first user equipment. The target second user equipment receives the unicast connection establishment request message, finds that the destination address is the L2 identifier of the relay UE, correspondingly stores the L2 identifier of the first user equipment, and returns a unicast connection establishment response message to the first user equipment, where the unicast connection establishment response message carries the L2 identifier of the target second user equipment and the L2 identifier of the first user equipment. In this way, establishment of the unicast connection is completed.

The L2 identifier of the first user equipment may be used for an SL of the first user equipment, and the L2 identifier of the first user equipment may be used to identify an SL between the first user equipment and another user equipment. For example, the L2 identifier of the first user equipment and the L2 identifier of the target second user equipment may correspondingly identify the SL between the first user equipment and the target second user equipment.

In this case, the first user equipment may determine which second user equipment provides a relay service for the first user equipment.

It can be learned from the foregoing process that, in the relay discovery process in S801 and S802, the second user equipment broadcasts the L2 identifier of the relay UE. After receiving the discovery message broadcast by the second user equipment, the first user equipment reports the L2 identifier and the signal quality of the second user equipment to the first access network device. The first access network device selects the target second user equipment, and indicates the selected target second user equipment to the first user equipment, so that the first user equipment obtains, based on the indication of the first access network device, the RNTI of the second user equipment from the target second user equipment. Because the L2 identifier is applied only to the SLbetween the second user equipment and the first user equipment, and is different from the RNTI of the second user equipment, a leakage risk of the RNTI of the second user equipment is avoided. After the second user equipment broadcasts the L2 identifier of the relay UE, even if a malicious eavesdropper obtains the L2 identifier of the second user equipment, no security risk is caused to the second user equipment, and security of the second user equipment is ensured. In addition, the first access network device selects the target second user equipment and indicates the target second user equipment to the first user equipment, and the first user equipment obtains the RNTI of the target second user equipment from the target second user equipment. This can reduce power consumption caused by selecting the target second user equipment by the first user equipment.

Optionally, if it is determined to switch the first user equipment from direct communication to relay communication, the method shown in FIG. 8A and FIG. 8B may further include S807 to S812.

S807: The first user equipment sends the second information to the first access network device. Correspondingly, the first access network device receives the second information.

It should be understood that if the second information obtained by the first user equipment from the target second user equipment in S803 does not carry the cell ID of the target second user equipment, the first user equipment further needs to send the cell ID of the target second user equipment to the first access network device in S807.

S808: The first access network device sends a third request to the second access network device based on the cell ID of the target second user equipment. Correspondingly, the second access network device receives the third request.

The second access network device may be an access network device that provides a network service for the target second user equipment. A cell identified by the cell ID of the target second user equipment is a cell within coverage of the second access network device. For example, as shown in FIG. 6, it is assumed that the target second user equipment is the UE 2, and the second access network device may be the access network device 2. For another example, it is assumed that the target second user equipment is the UE 7 in FIG. 6, and the second access network device may be the access network device 3.

The third request may be alternatively described as a handover request (handover request, HO Request), and the third request may be used to request to establish, for the first user equipment, a relay path that passes through the target second user equipment. The third request may carry the RNTI of the target second user equipment, or may carry other information, for example, may carry related configuration information used by the first user equipment to access the second access network device, for example, radio resource management (radio resource management, RRM) and access stratum (access stratum, AS) layer configuration information of the first user equipment.

S809: The second access network device performs RRC connection reconfiguration on the target second user equipment based on the third request.

For example, the second access network device sends a first RRC connection reconfiguration message to the target second user equipment, and the target second user equipment receives the first RRC connection reconfiguration message, and configures a radio bearer (radio bearer, RB) between the target second user equipment and the second access network device and a sidelink radio bearer between the target second user equipment and the first user equipment based on the first RRC connection reconfiguration message.

The first RRC connection reconfiguration (RRC connection reconfiguration) message may indicate a resource configuration used to transmit data of the first user equipment. Specifically, the first RRC connection reconfiguration message may include configuration information of a bearer between the target second user equipment and the second access network device and configuration information of a sidelink bearer between the target second user equipment and the first user equipment. The configuration information of the bearer between the target second user equipment and the second access network device may indicate a radio bearer RB used to transmit data of the first user equipment between the target second user equipment and the second access network device, the configuration information of the sidelink bearer between the target second user equipment and the first user equipment is used to transmit a radio bearer of the first user equipment between the target second user equipment and the first user equipment.

In this embodiment of this application, the RB may be a general name of a series of protocol entities and configurations provided by an access network device for user equipment, and is configured to transmit user data between the user equipment and the access network device. The RB includes a packet data convergence protocol (packet data convergence protocol, PDCP) protocol entity, a radio link control (radio link control, RLC) protocol entity, a media access control (media access control, MAC) protocol entity, a series of resources allocated by a physical layer (physical, PHY), and the like. The radio bearer may be classified into a data radio bearer and a signaling radio bearer. In a sidelink communication scenario, an RB may be referred to as a sidelink radio bearer.

It should be noted that, if the second access network device finds that the target second user equipment is in an idle (idle) state or an inactive (inactive) state before S809, the second access network device may send a paging (paging) message to the target second user equipment, to trigger the target second user equipment to switch from the idle state or the inactive state to the connected (connected) state.

S810: The second access network device sends, to the first access network device, a reply message corresponding to the third request. Correspondingly, the first access network device receives the reply message corresponding to the third request.

The reply message corresponding to the third request may be referred to as a handover request reply (handover request acknowledge, HO Request ACK) message. The reply message may indicate to switch a communication path of the first user equipment to a relay path. The reply message may carry indication information for switching the communication path of the first user equipment, and may further carry the configuration information of the sidelink bearer between the first user equipment and the target second user equipment, the PDCP layer configuration information for communication between the first user equipment and the second access network device, and service data adaptation protocol (service data adaptation protocol, SDAP) layer configuration information.

S811: The first access network device sends second RRC connection reconfiguration message to the first user equipment. Correspondingly, the first user equipment receives the second RRC connection reconfiguration message.

The second RRC connection reconfiguration message may be used by the first user equipment to complete configuration of the radio bearer on the SL between the first user equipment and the target second user equipment. Specifically, the second RRC connection reconfiguration message may include the configuration information of the sidelink bearer between the target second user equipment and the first user equipment, the PDCP layer configuration information for communication between the first user equipment and the second access network device, the SDAP layer configuration information, and the like.

S812: The first user equipment returns an RRC connection reconfiguration complete message to the second access network device through relay forwarding of the target second user equipment. Correspondingly, the second access network device receives the RRC connection reconfiguration complete message.

The RRC connection reconfiguration complete message may indicate that the first user equipment has successfully configured the sidelink radio bearer between the first user equipment and the target second user equipment.

In this case, an indirect (indirect) communication link of the first user equipment is established, and the first user equipment may communicate with the second access network device via the target second user equipment. In this embodiment of this application, the relay communication link may include the SL link from the first user equipment to the target second user equipment and the Uu link from the target second user equipment to the second access network device. The relay communication link may be alternatively described as a relay path or the like. This is not limited.

Based on the method shown in FIG. 8A and FIG. 8B, the second user equipment broadcasts the L2 identifier of the relay UE, so that a leakage risk of the RNTI of the second user equipment is avoided, and security of the second user equipment is ensured. In addition, the first user equipment securely reports the RNTI and/or the cell ID of the target second user equipment to the first access network device, to ensure that the first user equipment successfully completes path switching from direct communication to relay communication.

In this embodiment of this application, after the first access network device selects the target second user equipment, S807 to S812 in the method shown in FIG. 8A and FIG. 8B are not limited to that the first access network device triggers the second access network device to establish the relay path for the first user equipment. Alternatively, the first user equipment may trigger the target second user equipment to actively establish a connection to the second access network device, so that the second access network device establishes the relay path for the first user equipment after receiving the third request sent by the first access network device and the second request sent by the target second user equipment. Specifically, for the method, refer to descriptions in S906 to S912 in FIG. 9A and FIG. 9B.

FIG. 9A and FIG. 9B show a relay communication method according to an embodiment of this application. As shown in FIG. 9A and FIG. 9B, the method may include the following steps.

S901: At least one second user equipment broadcasts a discovery message, where the discovery message carries an L2 identifier of the second user equipment and a cell ID of the second user equipment.

For related descriptions of the L2 identifier, the cell ID, and an execution process of S901, refer to the descriptions in S801. Details are not described again.

S902: The first user equipment receives the discovery message broadcast by the at least one second user equipment, and measures the discovery message broadcast by the second user equipment, to obtain signal quality of the second user equipment.

S902 is the same as S802, and details are not described again.

S903: The first user equipment sends first information to a first access network device. Correspondingly, the first access network device receives the first information.

The first access network device may provide a network service for the first user equipment. For example, as shown in FIG. 6, it is assumed that the first user equipment is the UE 1, and the first access network device may be the access network device 1. For another example, as shown in FIG. 6, it is assumed that the first user equipment is the UE 5, and the first access network device may be the access network device 3.

The first information may be alternatively described as a measurement report, and the first information may indicate the at least one second user equipment and signal quality of each second user equipment. Specifically, different from that in the method shown in FIG. 8A and FIG. 8B, the first information may include but is not limited to the signal quality of the at least one second user equipment, the L2 identifier (or a temporary identifier) of the at least one second user equipment, and the cell ID of the at least one second user equipment, and may further include identification information of the first user equipment, for example, an L2 identifier of the first user equipment or a temporary identifier of the first user equipment.

It should be understood that the signal quality of the second user equipment, the L2 identifier of the second user equipment, and the cell ID of the second user equipment may be correspondingly included in the first information. For example, the signal quality of the second user equipment, the L2 identifier of the second user equipment, and the cell ID of the second user equipment may be correspondingly included in the first information in an array form, or may be included in the first information in a table form. This is not limited. The array form is used as an example. It is assumed that the second user equipment includes UE 1, UE 2, and UE 3, L2 identifiers of the three second user equipments are respectively L2 ID 1, L2 ID 2, and L2 ID 3, and cell IDs of the three second user equipments are respectively cell ID 1, cell ID 2, and cell ID 3. The first information may be {L2 ID 1, cell ID 1, signal quality of the UE 1}, {L2 ID 2, cell ID 2, signal quality of the UE 2}, and {L2 ID 3, cell ID 3, signal quality of the UE 3}.

S904: The first access network device selects target second user equipment from the at least one second user equipment based on the first information.

S904 is the same as S804, and details are not described again.

S905: The first access network device sends first indication information to the first user equipment. Correspondingly, the first user equipment receives the first indication information.

S905 is the same as S805, and details are not described again.

In this case, the first user equipment may determine which second user equipment provides a relay service for the first user equipment.

It can be learned from the foregoing process that, in the relay discovery process, the second user equipment broadcasts the L2 identifier of the relay UE. After receiving the discovery message broadcast by the second user equipment, the first user equipment reports the L2 identifier and the signal quality of the second user equipment to the first access network device. The first access network device selects the target second user equipment, and indicates selected target second user equipment to the first user equipment. Because the L2 identifier is applied only to the SL between the second user equipment and the first user equipment, and is different from an RNTI of the second user equipment, a leakage risk of the RNTI of the second user equipment is avoided. After the second user equipment broadcasts the L2 identifier of the relay UE, even if a malicious eavesdropper obtains the L2 identifier of the second user equipment, no security risk is caused to the second user equipment, and security of the second user equipment is ensured. In addition, the first access network device selects the target second user equipment and indicates the target second user equipment to the first user equipment, so that power consumption caused by selecting the target second user equipment by the first user equipment can be reduced.

Optionally, if the first access network device determines to switch the first user equipment from direct communication to relay communication, the method shown in FIG. 9A and FIG. 9B may further include S906 to S912.

S906: The first access network device sends a third request to a second access network device based on a cell ID of the target second user equipment. Correspondingly, the second access network device receives the third request.

The second access network device may be an access network device that provides a network service for the target second user equipment. A cell identified by the cell ID of the target second user equipment is a cell within coverage of the second access network device. For example, as shown in FIG. 6, it is assumed that the target second user equipment is the UE 2, and the second access network device may be the access network device 2. For another example, it is assumed that the target second user equipment is the UE 7 in FIG. 6, and the second access network device may be the access network device 3.

The third request may be alternatively described as a handover request (handover request, HO Request), and the third request may be used to request to establish a relay path for the first user equipment. Different from the method shown in FIG. 8A and FIG. 8B, the third request in the method shown in FIG. 9A and FIG. 9B may carry identification information of the first user equipment.

In this embodiment of this application, the identification information of the first user equipment may include but is not limited to an RNTI of the first user equipment, an L2 identifier of the first user equipment, a temporary identifier of the first user equipment, or the like. It should be noted that, if the identification information of the first user equipment includes the L2 identifier of the first user equipment or the temporary identifier of the first user equipment, before S906, the first user equipment may send the identification information of the first user equipment to the first access network device. For example, the first user equipment may add the identification information of the first user equipment to the first information in S903 and send the first information to the first access network device, or add the identification information of the first user equipment to other information and send other information to the first access network device.

S907: The first user equipment sends the identification information of the first user equipment to the target second user equipment based on first indication information, to trigger the target second user equipment to establish a relay path with the second access network device. Correspondingly, the target second user equipment receives the identification information of the first user equipment.

For related descriptions of the identification information of the first user equipment, refer to the description in S906. Details are not described again.

For example, the first user equipment may establish a unicast connection to the target second user equipment based on the first indication information, and send the identification information of the first user equipment to the target second user equipment through the unicast connection. For a process in which the first user equipment establishes the unicast connection to the target second user equipment, refer to the description in S806. Details are not described again.

S908: The target second user equipment sends a second request to the second access network device. Correspondingly, the second access network device receives the second request.

The second request may be used to request to establish a relay path for the first user equipment. The second request may carry the identification information of the first user equipment. It should be noted that a name of the second request is not limited in this application, and the second request may be alternatively described as another name such as a U2N relay configuration request or a U2N relay communication link configuration request. This is not limited.

It should be noted that this application is not limited to an execution sequence of S906 to S908. As shown in FIG. 9A and FIG. 9B, S906 may be performed before S907 and S908, or S907 and S908 may be performed before S906.

S909: The second access network device performs RRC connection reconfiguration on the target second user equipment.

For example, the second access network device sends a first RRC connection reconfiguration message to the target second user equipment, and the target second user equipment receives the first RRC connection reconfiguration message, and configures an RB between the target second user equipment and the second access network device and a sidelink radio bearer between the target second user equipment and the first user equipment based on the first RRC connection reconfiguration message.

For related descriptions of the first RRC connection reconfiguration message, refer to the description in S809. For an execution process of S909, refer to the description in S809. Details are not described again.

S910: The second access network device sends, to the first access network device, a reply message corresponding to the third request. Correspondingly, the first access network device receives the reply message corresponding to the third request.

For related descriptions of the reply message and an execution process of S910, refer to the description in S810. Details are not described again.

S911: The first access network device sends second RRC connection reconfiguration message to the first user equipment. Correspondingly, the first user equipment receives the second RRC connection reconfiguration message.

For related descriptions of the second RRC connection reconfiguration message and an execution process of S911, refer to the description in S811. Details are not described again.

S912: The first user equipment returns an RRC connection reconfiguration complete message to the second access network device through relay forwarding of the target second user equipment. Correspondingly, the second access network device receives the RRC connection reconfiguration complete message.

In this case, establishment of an indirect (indirect) communication link of the first user equipment is completed.

Based on the method shown in FIG. 9A and FIG. 9B, the second user equipment broadcasts the L2 identifier of the relay UE, so that a leakage risk of the RNTI of the second user equipment is avoided, and security of the second user equipment is ensured. In addition, the first user equipment triggers the target second user equipment to request the second access network device to establish a relay path for the first user equipment, to ensure that the first user equipment successfully completes path switching from direct communication to relay communication.

In FIG. 8A and FIG. 8B or FIG. 9A and FIG. 9B, the second user equipment broadcasts the L2 identifier of the relay UE, to avoid a security risk caused to the second user equipment because the RNTI of the second user equipment is leaked, and ensure security in the relay UE discovery process. Alternatively, another manner may be used to avoid bringing a security risk to the second user equipment, and ensure security in the relay UE discovery process. For example, as shown in FIG. 10A and FIG. 10B, the RNTI of the second user equipment is obtained through a unicast connection, to avoid a security risk caused to the second user equipment because the RNTI of the second user equipment is leaked, and ensure security in the relay UE discovery process; or as shown in FIG. 11A and FIG. 11B, an identifier that can be parsed by only the network side device is broadcast. The following describes the method shown in FIG. 10A and FIG. 10B and the method shown in FIG. 11A and FIG. 11B.

FIG. 10A and FIG. 10B show a relay communication method according to an embodiment of this application. In the communication method, first user equipment establishes a unicast connection to surrounding second user equipment that can serve as a relay, obtains an RNTI of the second user equipment through the unicast connection, and reports the obtained RNTI of the second user equipment and a cell ID of the second user equipment to a first access network device, so that the first access network device selects appropriate target second user equipment. As shown in FIG. 10A and FIG. 10B, the method may include the following steps.

S1001: The at least one second user equipment broadcasts a discovery (discovery) message.

The discovery message may not carry an L2 identifier of the second user equipment, the cell ID of the second user equipment, or the like.

Specifically, for an execution process of S 1001, refer to the description in S801. Details are not described again.

S1002: The first user equipment receives the discovery (discovery) message broadcast by the at least one second user equipment, and measures the discovery message broadcast by the second user equipment, to obtain signal quality of the second user equipment.

An execution process of S1002 is the same as that of S802. Details are not described again.

S1003: The first user equipment establishes a unicast connection to the second user equipment based on the discovery message broadcast by the second user equipment.

It should be noted that if the first user equipment has established a unicast connection to the second user equipment before S 1003, S 1003 is not performed; or if the first user equipment has not established a unicast connection to the second user equipment, S1003 is performed.

That the first user equipment establishes a unicast connection to the second user equipment based on the discovery message broadcast by the second user equipment may include: The first user equipment determines, based on the discovery message broadcast by the second user equipment, that the second user equipment may be selected as a relay device of the first user equipment, and then establishes a unicast connection to the second user equipment based on the L2 identifier of the second user equipment and an L2 identifier of the first user equipment. Specifically, for a process of establishing a unicast connection, refer to the description in S806. This is not limited.

For example, in the system shown in FIG. 6, it is assumed that the first user equipment is the UE 1, and the second user equipment includes the UE 2, the UE 3, and the UE 4. After receiving an L2 identifier sent by the UE 2, the UE 1 may establish a unicast connection 1 to the UE 2 based on the L2 identifier of the UE 2. After receiving an L2 identifier sent by the UE 3, the UE 1 may establish a unicast connection 2 to the UE 3 based on the L2 identifier of the UE 3. After receiving an L2 identifier sent by the UE 4, the UE 1 may establish a unicast connection to the UE 4 based on the L2 identifier of the UE 4. After each unicast connection is established, the UE 1 stores a correspondence between an L2 identifier of the UE 1 and the L2 identifier of the UE 2 corresponding to the unicast connection 1, a correspondence between the L2 identifier of the UE 1 and the L2 identifier of the UE 3 corresponding to the unicast connection 2, and a correspondence between the L2 identifier of the UE 1 and the L2 identifier of the UE 4 corresponding to the unicast connection 3. The UE 2 stores the correspondence between the L2 identifier of the UE 1 and the L2 identifier of the UE 2 corresponding to the unicast connection 1. The UE 3 stores the correspondence between the L2 identifier of the UE 1 and the L2 identifier of the UE 3 corresponding to the unicast connection 2. The UE 4 stores the correspondence between the L2 identifier of the UE 1 and the L2 identifier of the UE 4 corresponding to the unicast connection 3.

S 1004: The first user equipment obtains the RNTI and the cell ID of the second user equipment from the second user equipment through the unicast connection.

For related descriptions of the RNTI and the cell ID of the second user equipment, refer to the foregoing descriptions. Details are not described again.

It should be noted that S1002 to S1004 may be performed for each of the at least one second user equipment, or may be performed for only some of the at least one second user equipment. This is not limited. In this application, only an example in which S1002 to S1004 are performed for each of the at least one second user equipment is used for description.

S1005: The first user equipment sends first information to the first access network device. Correspondingly, the first access network device receives the first information.

The first access network device provides a network service for the first user equipment. For example, as shown in FIG. 6, it is assumed that the first user equipment is the UE 1, and the first access network device may be the access network device 1. For another example, as shown in FIG. 6, it is assumed that the first user equipment is the UE 5, and the first access network device may be the access network device 3.

The first information may be alternatively described as a measurement report, and the first information may indicate the at least one second user equipment and signal quality of each second user equipment. Specifically, different from that in the method shown in FIG. 8A and FIG. 8B or FIG. 9A and FIG. 9B, the first information may include but is not limited to the signal quality of the at least one second user equipment, the RNTI of the at least one second user equipment, and the cell ID of the at least one second user equipment.

It should be understood that the signal quality of the second user equipment, the RNTI of the second user equipment, and the cell ID of the second user equipment may be correspondingly included in the first information. For example, the signal quality of the second user equipment, the RNTI of the second user equipment, and the cell ID of the second user equipment may be correspondingly included in the first information in an array form, or may be included in the first information in a table form. This is not limited. The array form is used as an example. It is assumed that the second user equipment includes UE 1, UE 2, and UE 3, RNTIs of the three second user equipments are respectively an RNTI 1, an RNTI 2, and an RNTI 3, and cell IDs of the three second user equipments are respectively a cell ID 1, a cell ID 2, and a cell ID 3. The first information may be {RNTI 1, cell ID 1, signal quality of the UE 1}, {RNTI 2, cell ID 2, signal quality of the UE 2}, and {RNTI 3, cell ID 3, signal quality of the UE 3}.

S1006: The first access network device selects target second user equipment from the at least one second user equipment based on the first information.

The target second user equipment may be the second user equipment that provides a relay service for the first user equipment.

For example, the first access network device may use second user equipment with highest signal quality in the at least one second user equipment as the target second user equipment, or use second user equipment with best air interface signal quality in a plurality of second user equipments with relatively high signal quality as the target second user equipment.

Optionally, the first access network device may indicate a selection result to the first user equipment, for example, send, to the first access network device, first indication information that carries an RNTI of the target second user equipment.

In this case, which second user equipment provides a relay service for the first user equipment may be determined.

It can be learned from the foregoing process that, in a relay discovery process, the first user equipment establishes a unicast connection to the second user equipment, obtains the RNTI of the second user equipment through the unicast connection, and reports the L2 identifier and the signal quality of the second user equipment to the first access network device, so that the first access network device selects the target second user equipment. Because information transmitted through the unicast connection can be received by only a receiver, a leakage risk of the RNTI of the second user equipment is avoided, a malicious eavesdropper cannot obtain the RNTI of the second user equipment, no security risk is caused to the second user equipment, and security of the second user equipment is ensured. In addition, the first access network device selects the target second user equipment, so that power consumption caused by selecting the target second user equipment by the first user equipment can be reduced.

Optionally, if the first access network device determines to switch the first user equipment from direct communication to relay communication, the method shown in FIG. 10A and FIG. 10B may further include S1007 to S1012.

S 1007: The first access network device sends a third request to a second access network device based on a cell ID of the target second user equipment. Correspondingly, the second access network device receives the third request.

For related descriptions of the third request and an execution process of S 1007, refer to the description in S808. Details are not described again.

S1008: The second access network device performs RRC connection reconfiguration on the target second user equipment based on the third request. For example, the second access network device sends a first RRC connection reconfiguration message to the target second user equipment, and the target second user equipment receives the first RRC connection reconfiguration message, and configures an RB between the target second user equipment and the second access network device and a sidelink radio bearer between the target second user equipment and the first user equipment based on the first RRC connection reconfiguration message.

S1008 is the same as S809, and details are not described again.

S1009: The second access network device sends, to the first access network device, a reply message corresponding to the third request. Correspondingly, the first access network device receives the reply message corresponding to the third request.

S1009 is the same as S810, and details are not described again.

S1010: The first access network device sends second RRC connection reconfiguration message to the first user equipment. Correspondingly, the first user equipment receives the second RRC connection reconfiguration message.

S1010 is the same as S811, and details are not described again.

Further, after SL configuration between the first user equipment and the target second user equipment is completed, to save resources, the first user equipment may send a first request to second user equipment (which may be referred to as non-target second user equipment in this specification) other than the target second user equipment. The first request may be used to request to release the unicast connection. The second user equipment that receives the first request may delete the correspondence that is stored by the second user equipment and that is between the L2 identifier of the first user equipment and the L2 identifier of the second user equipment. Correspondingly, the first user equipment may also delete a correspondence that is stored in the first user equipment and that is between the L2 identifier of the first user equipment and an L2 identifier of the non-target second user equipment. In this way, resource utilization can be improved.

It should be understood that a name of the first request is not limited in this application, and the first request may be named as a release request, an SL release request, or the like. In addition, in this embodiment of this application, the first user equipment may send the first request to some non-target second user equipments, or may send the first request to all target second user equipments. This is not limited.

That the first user equipment sends the first request may include: The first user equipment sends the first request based on second indication information. The second indication information may indicate the first user equipment to release a unicast connection between the first user equipment and another unselected second user equipment. The second indication information may be alternatively described as a release indication, an SL release indication, or the like.

Optionally, the second indication information may be sent by the first access network device to the first user equipment. For example, in a possible design, the first access network device may send the second indication information to the first user equipment when sending the first indication information to the first user equipment in S 1006. For example, the second indication information may be carried in the first indication information. In this case, the foregoing process of releasing the unicast connection may be performed after the first user equipment receives the first indication information in S1006. In another possible design, the first indication information may alternatively be sent to the first user equipment when the first access network device sends the second RRC connection reconfiguration message to the first user equipment in S1010. For example, the second indication information may be carried in the second RRC connection configuration message. In this case, the process of releasing the unicast connection may be performed during SL configuration in S1010.

S1011: The first user equipment returns an RRC connection reconfiguration complete message to the second access network device through relay forwarding of the target second user equipment. Correspondingly, the second access network device receives the RRC connection reconfiguration complete message.

The RRC connection reconfiguration complete message may indicate that the first user equipment has successfully configured the sidelink radio bearer between the first user equipment and the target second user equipment.

In this case, establishment of an indirect (indirect) communication link of the first user equipment is completed.

Based on the method shown in FIG. 10A and FIG. 10B, the first user equipment establishes a unicast connection to the surrounding second user equipment that may provide a relay service for the first user equipment, and obtains the RNTI of the second user equipment through the unicast connection. This avoids a leakage risk of the RNTI of the second user equipment, and ensures security of the second user equipment. In addition, the first user equipment securely reports the RNTI and/or the cell ID of the second user equipment to the first access network device, and the first access network device selects the target second user equipment, to ensure that the first user equipment successfully completes path switching from direct communication to relay communication when determining to perform path switching on the first user equipment.

FIG. 11A and FIG. 11B show a relay communication method according to an embodiment of this application. In the communication method, second user equipment broadcasts a first identifier of relay UE. The first identifier is obtained through encryption by using a first algorithm, the first identifier can be parsed by only a network side device, and the first identifier corresponds to an RNTI of the second user equipment. As shown in FIG. 11A and FIG. 11B, the method may include the following steps.

S 1101: At least one second user equipment broadcasts a discovery message, where the discovery message carries a first identifier and a cell ID of the second user equipment.

The first identifier of the second user equipment corresponds to the RNTI of the second user equipment, and the first identifier may be obtained through encryption by using the first algorithm. For example, the first identifier of the second user equipment may be obtained by encrypting the RNTI of the second user equipment by using the first algorithm. The first algorithm is known by only the second user equipment and the network side device (or a device authorized by the network side device). The first identifier can be identified only by the second user equipment and the network side device, or can be identified by some devices authorized by the network side device. In addition, another device cannot decrypt the first identifier to obtain the RNTI of the second user equipment. A name of the first identifier is not limited in this application, and the first identifier may be alternatively described as a network identifier or a new identifier (new ID).

Specifically, a manner in which the at least one second user equipment broadcasts the first identifier and the cell ID of the relay UE is the same as a manner in which the at least one second user equipment broadcasts the L2 identifier of the relay UE in S801. Details are not described again.

S1102: The first user equipment receives the discovery message broadcast by the at least one second user equipment, and measures the discovery message broadcast by the second user equipment, to obtain signal quality of the second user equipment.

An execution process of S1102 is the same as that of S802. Details are not described again.

S 1103: The first user equipment sends first information to a first access network device. Correspondingly, the first access network device receives the first information.

The first access network device may provide a network service for the first user equipment. For example, as shown in FIG. 6, it is assumed that the first user equipment is the UE 1, and the first access network device may be the access network device 1. For another example, as shown in FIG. 6, it is assumed that the first user equipment is the UE 5, and the first access network device may be the access network device 3.

The first information may be alternatively described as a measurement report, and the first information may indicate the at least one second user equipment and signal quality of each second user equipment. Specifically, different from that in the methods shown in FIG. 8A and FIG. 8B to FIG. 10A and FIG. 10B, the first information may include but is not limited to signal quality of the at least one second user equipment, the first identifier of the at least one second user equipment, and the cell ID of the at least one second user equipment.

It should be understood that the signal quality of the second user equipment, the first identifier of the second user equipment, and the cell ID of the second user equipment may be correspondingly included in the first information. For example, the signal quality of the second user equipment, the first identifier of the second user equipment, and the cell ID of the second user equipment may be correspondingly included in the first information in an array form, or may be included in the first information in a table form. This is not limited. The array form is used as an example. It is assumed that the second user equipment includes UE 1, UE 2, and UE 3, first identifiers of the three second user equipments are respectively a first identifier 1, a first identifier 2, and a first identifier 3, and cell IDs of the three second user equipments are respectively a cell ID 1, a cell ID 2, and a cell ID 3. The first information may be {first identifier 1, cell ID 1, signal quality of the UE 1}, {first identifier 2, cell ID 2, signal quality of the UE 2}, and {first identifier 3, cell ID 3, signal quality of the UE 3}.

S1104: The first access network device selects target second user equipment from the at least one second user equipment based on the first information.

S1104 is the same as S804, and details are not described again.

In this case, which second user equipment provides a relay service for the first user equipment may be determined.

It can be learned from the foregoing process that, in a relay discovery process, the second user equipment broadcasts the first identifier of the relay UE, and only the network side device can parse the first identifier. Even if a malicious eavesdropper obtains the first identifier of the second user equipment, no security risk is caused to the second user equipment, and security of the second user equipment is ensured. In addition, the first access network device selects the target second user equipment.

If the first access network device determines to switch the first user equipment from direct communication to relay communication, the method shown in FIG. 11A and FIG. 11B may further include S1105 to S 1109.

S 1105: The first access network device sends a third request to a second access network device based on a cell ID of the target second user equipment. Correspondingly, the second access network device receives the third request.

The second access network device may be an access network device that provides a network service for the target second user equipment. For example, as shown in FIG. 6, it is assumed that the target second user equipment is the UE 2, and the second access network device may be the access network device 2. For another example, it is assumed that the target second user equipment is the UE 7 in FIG. 6, and the second access network device may be the access network device 3.

The third request may be alternatively described as a handover request (handover request, HO Request), and the third request may be used to request to establish a relay path for the first user equipment. Different from content carried in the third request in FIG. 10A and FIG. 10B, the third request in S 1105 may carry a first identifier of the target second user equipment.

S 1106: The second access network device obtains the first identifier of the target second user equipment from the third request, parses the first identifier of the target second user equipment to obtain an RNTI of the target second user equipment, and performs RRC connection reconfiguration on the target second user equipment based on the RNTI of the target second user equipment.

For example, the second access network device sends a first RRC connection reconfiguration message to the target second user equipment, and the target second user equipment receives the first RRC connection reconfiguration message, and configures an RB between the target second user equipment and the second access network device and a sidelink radio bearer between the target second user equipment and the first user equipment based on the first RRC connection reconfiguration message.

S1107: The second access network device sends, to the first access network device, a reply message corresponding to the third request. Correspondingly, the first access network device receives the reply message corresponding to the third request.

S1109 is the same as S810, and details are not described again.

S1108: The first access network device sends second RRC connection reconfiguration message to the first user equipment. Correspondingly, the first user equipment receives the second RRC connection reconfiguration message.

51110 is the same as S811, and details are not described again.

S1109: The first user equipment returns an RRC connection reconfiguration complete message to the second access network device through relay forwarding of the target second user equipment.

The RRC connection reconfiguration complete message may indicate that the first user equipment has successfully configured the sidelink radio bearer between the first user equipment and the target second user equipment.

In this case, establishment of an indirect (indirect) communication link of the first user equipment is completed.

Based on the method shown in FIG. 11A and FIG. 11B, the second user equipment broadcasts the first identifier of the relay UE. Because only the network side device can parse the first identifier, even if a malicious eavesdropper obtains the first identifier of the second user equipment, the RNTI of the second user equipment cannot be obtained. This avoids a leakage risk of the RNTI of the second user equipment, and ensures security of the second user equipment. In addition, the first user equipment securely reports the first identifier, the cell ID, and the signal quality of the second user equipment to the first access network device, and the first access network device selects the target second user equipment, to ensure that the first user equipment successfully completes path switching from direct communication to relay communication when determining to perform path switching on the first user equipment.

In the methods shown in FIG. 8A and FIG. 8B to FIG. 11A and FIG. 11B, the first access network device selects the target second user equipment. Alternatively, the first user equipment may select the target second user equipment. Specifically, for a method for selecting the target second user equipment by the first user equipment, refer to description of FIG. 12A and FIG. 12B or FIG. 13A and FIG. 13B.

FIG. 12A and FIG. 12B are a flowchart of a relay communication method according to an embodiment of this application. As shown in FIG. 12A and FIG. 12B, the method includes the following steps.

S1201: At least one second user equipment broadcasts a discovery (discovery) message.

Optionally, if the second user equipment does not establish a unicast connection to first user equipment, the discovery message broadcast by the second user equipment may carry an L2 identifier of the second user equipment. In this way, after receiving the discovery message broadcast by the second user equipment, the first user equipment may establish a unicast connection to the second user equipment based on the L2 identifier of the second user equipment in the discovery message, and transmit information (for example, an RNTI of the second user equipment) to each other through the unicast connection, to ensure security of transmitted information. For the second user equipment that has established a unicast connection to the first user equipment, to reduce signaling overheads, the discovery message broadcast by the user equipment may not carry too much information, for example, the L2 identifier of the second user equipment or the cell ID of the second user equipment.

Specifically, for an execution process of S1201, refer to the description in S801. Details are not described again.

S 1202: The first user equipment receives the discovery message broadcast by the at least one second user equipment, and measures the discovery message broadcast by the second user equipment, to obtain signal quality of the second user equipment.

S1202 is the same as S802, and details are not described again.

S1203: The first user equipment selects target second user equipment from the at least one second user equipment based on the signal quality of the at least one second user equipment.

For example, the first user equipment may select the target second user equipment based on the signal quality of the at least one second user equipment. For example, second user equipment with highest signal quality in the at least one second user equipment may serve as the target second user equipment; or second user equipment with best air interface signal quality in a plurality of second user equipments with relatively high signal quality is used as the target second user equipment.

It should be understood that this application is not limited to selecting the target second user equipment based on the signal quality of the at least one second user equipment. Alternatively, the target second user equipment may be selected based on the signal quality of the at least one second user equipment and other auxiliary information (for example, a load status of the second user equipment). This is not limited.

S1204: The first user equipment establishes a unicast connection to the target second user equipment, and obtains second information through the unicast connection.

It should be noted that the first user equipment establishes a unicast connection to the target second user equipment is an optional action. If the first user equipment has established a unicast connection to the second user equipment before S1204, establishing the unicast connection is not performed; or if the first user equipment has not established a unicast connection to the second user equipment, establishing the unicast connection is performed.

Specifically, for a process of establishing a unicast connection, refer to the description in S806. Details are not described again.

The second information may indicate an RNTI of the target second user equipment and a cell in which the target second user equipment is located. Specifically, the second information may include the RNTI of the target second user equipment and a cell ID of the target second user equipment. It should be noted that, if the second user equipment broadcasts the cell ID of the second user equipment in S 1201, the second information in S1204 may not include the cell ID of the target second user equipment; or if the second user equipment does not broadcast the cell ID of the second user equipment in S1201, the second information in S1204 includes the cell ID of the target second user equipment.

In this case, the first user equipment may determine which second user equipment provides a relay service for the first user equipment, and obtain the RNTI and/or the cell ID of the second user equipment.

It can be learned from the foregoing process that, in a relay discovery procedure, the second user equipment broadcasts the L2 identifier of the relay UE. After monitoring the discovery message broadcast by the second user equipment, the first user equipment obtains signal quality of each second user equipment through measurement, selects the target second user equipment based on the signal quality of each second user equipment, and obtains the RNTI and/or the cell ID of the target second user equipment through the unicast connection. This avoids a leakage risk of the RNTI of the second user equipment and ensures security of the second user equipment. In addition, the first user equipment selects the target second user equipment, to reduce a delay in selecting the target second user equipment.

Optionally, if it is determined to switch the first user equipment from direct communication to relay communication, the method shown in FIG. 12A and FIG. 12B may further include S1205 to S1210.

S1205: The first user equipment sends the second information to the first access network device. Correspondingly, the first access network device receives the second information.

S1205 is the same as S807, and details are not described again.

S1206: The first access network device sends a third request to a second access network device based on the cell ID of the target second user equipment. Correspondingly, the second access network device receives the third request.

For related descriptions of the third request and an execution process of S1207, refer to the description in S808. Details are not described again.

S1207: The second access network device performs RRC connection reconfiguration on the target second user equipment based on the third request. For example, the second access network device sends a first RRC connection reconfiguration message to the target second user equipment, and the target second user equipment receives the first RRC connection reconfiguration message, and configures an RB between the target second user equipment and the second access network device and a sidelink radio bearer between the target second user equipment and the first user equipment based on the first RRC connection reconfiguration message.

S1208 is the same as S809, and details are not described again.

S1208: The second access network device sends, to the first access network device, a reply message corresponding to the third request. Correspondingly, the first access network device receives the reply message corresponding to the third request.

S1209 is the same as S810, and details are not described again.

S1209: The first access network device sends second RRC connection reconfiguration message to the first user equipment. Correspondingly, the first user equipment receives the second RRC connection reconfiguration message.

S1210 is the same as S811, and details are not described again.

S1210: The first user equipment returns an RRC connection reconfiguration complete message to the second access network device through relay forwarding of the target second user equipment. Correspondingly, the second access network device receives the RRC connection reconfiguration complete message.

The RRC connection reconfiguration complete message may indicate that the first user equipment has successfully configured the sidelink radio bearer between the first user equipment and the target second user equipment.

In this case, establishment of an indirect (indirect) communication link of the first user equipment is completed.

Based on the method shown in FIG. 12A and FIG. 12B, after obtaining, through measurement, signal quality of second user equipment surrounding the first user equipment that may provide a relay service for the first user equipment, the first user equipment selects target second user equipment based on signal quality of a plurality of second user equipments, establishes a unicast connection to the target second user equipment, and obtains an RNTI of the second user equipment through the unicast connection. This avoids a leakage risk of the RNTI of the second user equipment, and ensures security of the second user equipment. In addition, the first user equipment securely reports the RNTI and/or the cell ID of the target second user equipment to the first access network device, and triggers the first access network device to switch the first user equipment from direct communication to relay communication.

In this embodiment of this application, the method for selecting the target second user equipment by the first user equipment is not limited to S1205 to S1210 in the method shown in FIG. 12A and FIG. 12B. The first access network device triggers the second access network device to establish a relay path for the first user equipment. Alternatively, the first user equipment may trigger the target second user equipment to actively establish a connection to the second access network device, so that the second access network device establishes the relay path for the first user equipment after receiving the third request sent by the first access network device and a second request sent by the target second user equipment. Specifically, for the method, refer to the descriptions in S 1306 to S1311 in FIG. 13A and FIG. 13B.

FIG. 13A and FIG. 13B are a flowchart of a relay communication method according to an embodiment of this application. As shown in FIG. 13A and FIG. 13B, the method includes the following steps.

S1301: At least one second user equipment broadcasts a discovery (discovery) message.

Specifically, for an execution process of S1301, refer to the description in S1201. Details are not described again.

S1302: First user equipment receives the discovery message broadcast by the at least one second user equipment, and measures the discovery message broadcast by the second user equipment, to obtain signal quality of the second user equipment.

S1302 is the same as S802, and details are not described again.

S1303: The first user equipment selects target second user equipment from the at least one second user equipment based on the signal quality of the at least one second user equipment.

S1303 is the same as S1302, and details are not described again.

In this case, the first user equipment may determine which second user equipment provides a relay service for the first user equipment.

It can be learned from the foregoing process that, in a relay discovery process, the second user equipment broadcasts the discovery message. After monitoring the discovery message broadcast by the second user equipment, the first user equipment obtains signal quality of each second user equipment through measurement, and selects the target second user equipment based on the signal quality of each second user equipment. This avoids a leakage risk of the RNTI of the second user equipment, and ensures security of the second user equipment. In addition, the first user equipment selects the target second user equipment, to reduce a delay in selecting the target second user equipment.

Optionally, if it is determined to switch the first user equipment from direct communication to relay communication, the method shown in FIG. 13A and FIG. 13B may further include S1304 to S1311.

S1304: The first user equipment sends a cell ID of the target second user equipment to a first access network device. Correspondingly, the first access network device receives the cell ID of the target second user equipment.

Optionally, the first user equipment may further send identification information of the first user equipment to the first access network device.

S1305: The first access network device sends a third request to a second access network device based on the cell ID of the target second user equipment. Correspondingly, the second access network device receives the third request.

The second access network device may be an access network device that provides a network service for the target second user equipment. For example, as shown in FIG. 6, it is assumed that the target second user equipment is the UE 2, and the second access network device may be the access network device 2. For another example, it is assumed that the target second user equipment is the UE 7 in FIG. 6, and the second access network device may be the access network device 3.

The third request may be alternatively described as a handover request (handover request, HO Request), and the third request may be used to request to establish a relay path for the first user equipment. Different from the method shown in FIG. 12A and FIG. 12B, the third request in the method shown in FIG. 12A and FIG. 12B may carry identification information of the first user equipment.

In this embodiment of this application, the identification information of the first user equipment may include but is not limited to an RNTI of the first user equipment, an L2 identifier of the first user equipment, a temporary identifier of the first user equipment, or the like. It should be noted that, if the identification information of the first user equipment includes the L2 identifier of the first user equipment or the temporary identifier of the first user equipment, before S 1305, the first user equipment may send the identification information of the first user equipment to the first access network device, for example, add the identification information of the first user equipment to a message sent by the first user equipment to the first access network device in S1304.

S1306: The first user equipment sends the identification information of the first user equipment to the target second user equipment. Correspondingly, the target second user equipment receives the identification information of the first user equipment.

The identification information of the first user equipment may be carried in a U2N relay connection request. The U2N relay connection request may be used to request to establish a relay path (or referred to as an indirect communication link) for the first user equipment.

For example, the first user equipment may establish a unicast connection to the target second user equipment based on first indication information, and send the identification information of the first user equipment to the target second user equipment through the unicast connection.

S1307: The target second user equipment sends a second request to the second access network device. Correspondingly, the second access network device receives the second request.

The second request may be used to request to establish a relay path for the first user equipment. The second request may carry the identification information of the first user equipment. It should be noted that a name of the second request is not limited in this application, and the second request may be alternatively described as another name such as a U2N relay configuration request or a U2N relay communication link configuration request. This is not limited.

It should be noted that an execution sequence of S1304 to S1307 is not limited in this application. As shown in FIG. 13A and FIG. 13B, S 1304 and S1305 may be first performed, and then S 1306 and S 1307 are performed; or S1306 and S 1307 may be first performed, and then S 1304 and S 1305 are performed.

S1308: The second access network device performs RRC connection reconfiguration on the target second user equipment. For example, the second access network device sends a first RRC connection reconfiguration message to the target second user equipment, and the target second user equipment receives the first RRC connection reconfiguration message, and configures an RB between the target second user equipment and the second access network device and a sidelink radio bearer between the target second user equipment and the first user equipment based on the first RRC connection reconfiguration message.

For related descriptions of the first RRC connection reconfiguration message, refer to the description in S809. For an execution process of S1309, refer to the description in S809. Details are not described again.

S1309: The second access network device sends, to the first access network device, a reply message corresponding to the third request. Correspondingly, the first access network device receives the reply message corresponding to the third request.

For related descriptions of the reply message and an execution process of S 1310, refer to the description in S810. Details are not described again.

S1310: The first access network device sends second RRC connection reconfiguration message to the first user equipment. Correspondingly, the first user equipment receives the second RRC connection reconfiguration message.

For related descriptions of the second RRC connection reconfiguration message and an execution process of S1311, refer to the description in S811. Details are not described again.

S1311: The first user equipment returns an RRC connection reconfiguration complete message to the second access network device through relay forwarding of the target second user equipment.

In this case, establishment of an indirect (indirect) communication link of the first user equipment is completed.

Based on the method shown in FIG. 13A and FIG. 13B, the second user equipment broadcasts the L2 identifier of the relay UE, so that a leakage risk of the RNTI of the second user equipment is avoided, and security of the second user equipment is ensured. In addition, the first user equipment selects the target second user equipment, and triggers the target second user equipment to request the second access network device to establish a relay path for the first user equipment, to ensure that the first user equipment successfully completes path switching from direct communication to relay communication.

The foregoing method embodiment describes the switching of UE in an RRC connected state from direct communication to relay communication. Optionally, in a communication process of UE, the UE may change from an RRC connected state to an idle (idle) state or an inactive (inactive) state, and camp on a serving cell (serving cell). In this case, to ensure signal quality of the camped cell, the UE may perform cell selection/reselection and/or relay selection/reselection. Specifically, for how the UE performs cell selection/reselection and/or relay selection/reselection, refer to the following description.

In a scenario in which the UE directly communicates with a network side device, the UE in an idle/inactive state directly camps on a current serving cell. If the UE determines that air interface signal quality (for example, Uu signal quality) of the UE is less than a first preset threshold, it indicates that the air interface quality of the UE is relatively poor, and the UE is triggered to perform the following solutions. For related descriptions of the air interface signal quality of the UE, refer to the foregoing descriptions. Details are not described again. The first preset threshold may be configured or preconfigured by the network side device that provides a service for the UE.

In a possible solution, the UE performs both a cell selection/reselection process and a relay (relay) selection process. If the cell selection/reselection process is successfully performed prior to the relay selection process, the UE accesses a new cell based on a cell selection/reselection result. If the relay selection process is successfully performed before the cell selection/reselection process, the UE accesses the network side device based on a relay selection result via target relay UE, and communicates with the network side device via the target relay UE.

In another possible solution, the UE performs a cell selection/reselection process. If an appropriate cell is selected by using the cell selection/reselection process, the UE accesses a new cell based on a cell selection/reselection result. On the contrary, if the UE does not select an appropriate cell by using the cell selection/reselection process, the UE performs a relay selection process. If the UE selects target relay UE by performing the relay selection process, the UE accesses the network side device via the target relay UE, and communicates with the network side device via the target relay UE.

In still another possible solution, a cell selection/reselection priority and a relay selection priority are preconfigured.

The cell selection/reselection priority and the relay selection priority may be configured by the UE, or may be pre-specified in a protocol, or may be preconfigured by the network side device for the UE. This is not limited. Optionally, the cell selection/reselection priority may be higher than the relay selection priority, or the relay selection priority is higher than the cell selection/reselection priority. This is not limited.

When the cell selection/reselection priority is higher than the relay selection priority, the UE performs the second possible solution.

When the relay selection priority is higher than the cell selection/reselection priority, the UE performs the relay selection process. If the UE selects target relay UE by performing the relay selection process, the UE accesses the network side device via the target relay UE, and communicates with the network side device via the target relay UE. If the UE does not select the target relay UE by performing the relay selection process, the UE performs the cell selection/reselection process. If an appropriate cell is selected in the cell selection/reselection process, the UE accesses a new cell based on a cell selection/reselection result.

Based on the foregoing several possible solutions, the UE may flexibly select to directly access a new cell or access a cell via relay UE. This improves flexibility of accessing a network by the UE.

In a scenario in which UE (which may be referred to as remote UE) performs relay communication (or referred to as relay communication) with a network side device via relay UE, UE in an idle/inactive state camps on a serving cell of the relay UE via the relay UE. There are the following possible solutions for a manner in which the UE accesses a network. The following describes the possible solutions by using an example in which the UE is remote UE and UE that provides relay for the UE is referred to as relay UE.

In a possible solution, the remote UE keeps cell selection/reselection. For example, the remote UE may periodically perform cell measurement and selection. If a cell selection result indicates that a first cell exists, and signal quality corresponding to the first cell is greater than a first preset threshold, it indicates that a condition for performing relay selection by the remote UE is not met. In this case, the remote UE does not perform relay selection, but releases an SL connection to the relay UE, and accesses the first cell.

For related descriptions of the first threshold, refer to the foregoing descriptions. Details are not described again.

In another possible solution, the remote UE determines signal quality of an SL between the remote UE and the relay UE. If the remote UE determines that the signal quality of the SL between the remote UE and the relay UE is less than a second preset threshold, it indicates that the signal quality of the SL is poor. In this case, the remote UE is triggered to perform cell selection. In this way, the remote UE does not need to always perform cell selection/reselection, and energy can be saved.

If the cell selection is successfully performed, a cell selection result indicates that a first cell exists, and signal quality corresponding to the first cell is greater than a first preset threshold, it indicates that a condition for performing relay selection by the remote UE is not met. In this case, the remote UE does not perform relay selection, but releases an SL connection to the relay UE, and accesses the first cell.

On the contrary, if the cell selection result indicates that there is no cell whose signal quality is greater than the first preset threshold, the remote UE performs the relay selection process. If the remote UE selects new target relay UE by performing the relay selection process, the remote UE accesses the network side device via the new target relay UE, and communicates with the network side device via the target relay UE.

The signal quality of the SL between the remote UE and the relay UE may be referred to as signal quality of a PCS interface between the remote UE and the relay UE. For related descriptions of the signal quality of the SL between the remote UE and the relay UE, refer to the foregoing descriptions. Details are not described again. The second preset threshold may be configured for the UE by the network side device that provides a service for the UE, or may be preconfigured.

In still another possible solution, the remote UE does not continuously perform cell selection/reselection. When determining that signal quality of an SL between the remote UE and the relay UE is less than a second preset threshold, the remote UE first triggers the remote UE to perform relay selection. If the remote UE performs a relay selection process to select new target relay UE, the remote UE accesses a network side device via the new target relay UE, and communicates with the network side device via the target relay UE.

On the contrary, if no new relay UE is selected, the cell selection/reselection process is performed. If the cell selection/reselection is successfully performed, a cell selection/reselection result indicates that a first cell exists, and signal quality corresponding to the first cell is greater than a first preset threshold, the remote UE releases an SL connection to the relay UE, and accesses the first cell.

In yet another possible solution, the remote UE does not continuously perform cell selection/reselection. When the remote UE determines that signal quality of an SL between the remote UE and the relay UE is less than a second preset threshold, the remote UE simultaneously performs a cell selection/reselection process and a relay (relay) selection process. If the cell selection/reselection process is successfully performed prior to the relay selection process, the UE accesses a new cell based on a cell selection/reselection result. If the relay selection process is successfully performed before the cell selection/reselection process, the UE accesses the network side device based on a relay selection result via target relay UE, and communicates with the network side device via the target relay UE.

The cell selection/reselection may mean that when the UE camps on a cell, whether to perform cell selection/reselection is determined by measuring signal quality (such as RSRP, RSSI, RSRQ, and SINR) of a Uu interface. If the signal quality of the Uu interface is less than a threshold, the UE measures information such as signal quality and priorities of neighboring cells and performs reselection evaluation to select a new cell to cavmp on. Specifically, for a cell selection/reselection procedure, refer to the description in the 3rd generation partnership project (3rd generation partnership project, 3GPP) protocol TS 38.300, and for a reselection evaluation method, refer to the description in the 3GPP protocol TS 38.304.

The relay selection may mean that when the UE accesses a network via the relay UE, whether to perform relay selection is determined by measuring signal quality (such as RSRP, RSSI, RSRQ, and SINR) of an SL between the UE and the relay UE. If signal quality of the SL is less than a threshold, the UE measures information such as signal quality and a priority of an SL of surrounding available relay UE and performs reselection evaluation to select new relay UE to reaccess the network. Specifically, for a relay selection procedure, refer to descriptions in the 3GPP protocol TS 36.331.

The foregoing mainly describes the solutions provided in embodiments of this application from a perspective of interaction between network elements. It may be understood that, to implement the foregoing functions, each communication apparatus, such as the first user equipment, the second user equipment, the first access network device, or the second access network device includes corresponding hardware structures and/or software modules used to perform various functions. A person skilled in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, functional modules of the first user equipment, the second user equipment, the first access network device, and the second access network device may be divided based on the foregoing method examples. For example, functional modules may be divided corresponding to functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

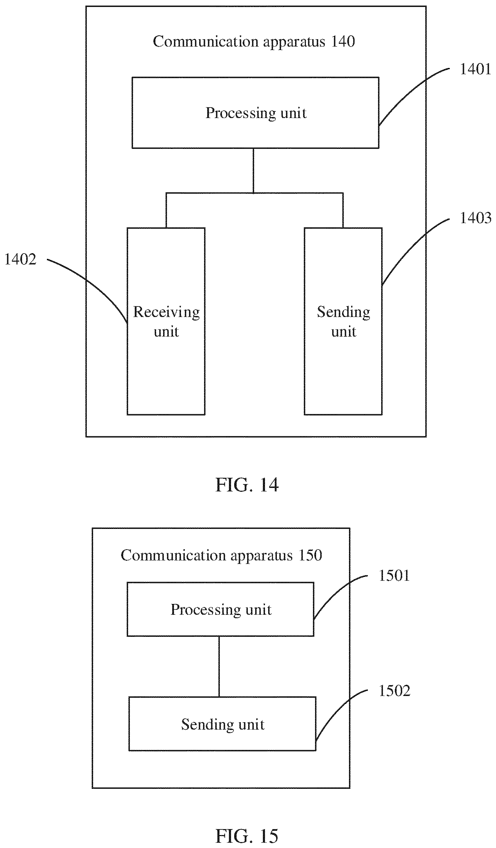

FIG. 14 is a structural diagram of a communication apparatus 140. The communication apparatus 140 may be first user equipment, or a chip or a chip system in the first user equipment. The communication apparatus 140 may be configured to perform functions of the first user equipment in the foregoing embodiments. In an implementation, the communication apparatus shown in FIG. 14 may include a processing unit 1401, a receiving unit 1402, and a sending unit 1403.

In a possible design, the receiving unit 1402 is configured to receive an L2 identifier of at least one second user equipment. For example, the receiving unit 1402 may support the communication apparatus 140 in performing S802.

The sending unit 1403 is configured to send first information to a first access network device. The first information may be used by the first access network device to select target second user equipment. For example, the first information may include signal quality of the at least one second user equipment and identification information of the at least one second user equipment (for example, an L2 identifier or a temporary identifier of the second user equipment). For example, the sending unit 1403 may support the communication apparatus 140 in performing S803.

Optionally, the receiving unit 1402 may be further configured to receive first indication information from the first access network device. The first indication information may indicate target second user equipment, the target second user equipment may be configured to provide a relay service for the first user equipment, and the first user equipment may perform relay communication with a second access network device via the target second user equipment. For example, the receiving unit 1402 may support the communication apparatus 140 in performing S805.

In another possible design, the receiving unit 1402 is configured to: receive a discovery message (for example, may be referred to as a discovery message) broadcast by at least one second user equipment, and determine, based on the discovery message, second user equipment that can serve as a relay of the first user equipment. For example, the receiving unit 1402 may support the communication apparatus 140 in performing S1002.

The receiving unit 1402 is configured to obtain an RNTI of the second user equipment from the determined second user equipment through a unicast connection. Optionally, a cell ID is also obtained. For example, the receiving unit 1402 may support the communication apparatus 140 in performing S1004.

The sending unit 1403 is configured to send first information to a first access network device, where the first information may be used by the first access network device to select the target second user equipment. For example, the first information may include signal quality of at least one second user equipment and an RNTI of the at least one second user equipment. For example, the sending unit 1403 may support the communication apparatus 140 in performing S 1005.

In still another possible design, the receiving unit 1402 is configured to receive a discovery message (for example, may be referred to as a discovery message) that is sent by the at least one second user equipment and that carries a first identifier. The processing unit 1401 is configured to determine, based on the discovery message, second user equipment that can serve as a relay of the first user equipment, and obtain signal quality of the second user equipment based on the discovery message broadcast by the second user equipment. The sending unit 1403 is configured to send first information to a first access network device, where the first information may be used by the first access network device to select target second user equipment, for example, the first information may include the signal quality of the at least one second user equipment and a first identifier of the at least one second user equipment. The first identifier is obtained through encryption by using a first algorithm, the first identifier can be parsed by only a network side device, and the first identifier of the second user equipment corresponds to an RNTI of the second user equipment. For example, the processing unit 1401 and the sending unit 1403 may support the communication apparatus 140 in performing S1102 and S1103.

In yet another possible design, the receiving unit 1402 is configured to receive a discovery message (for example, may be referred to as a discovery message) broadcast by at least one second user equipment. The processing unit 1401 is configured to determine, based on the discovery message, second user equipment that can serve as a relay of the first user equipment, obtain signal quality of the second user equipment based on the discovery message broadcast by the second user equipment, and select target second user equipment based on the signal quality of the second user equipment. For example, the processing unit 1401 and the receiving unit 1402 may support the communication apparatus 140 in performing S1202 and S1203.

The receiving unit 1402 is further configured to: obtain an RNTI and/or a cell ID of the target second user equipment from the target second user equipment. The sending unit 1403 is configured to send the RNTI and/or the cell ID of the target second user equipment to a first access network device, to trigger the first access network device to indicate the RNTI of the target second user equipment to a second access network device, so that the second access network device establishes a relay path from the first user equipment to the target second user equipment and then from the target second user equipment to the second access network device. For example, the receiving unit 1402 and the sending unit 1403 may support the communication apparatus 140 in performing S1204 and S1205.

Alternatively, optionally, the sending unit 1403 is configured to send identification information of the first user equipment to the target second user equipment, to trigger the target second user equipment to send a second request to the second access network device to request the second access network device to establish a relay path for the first user equipment. For example, the sending unit 1403 may support the communication apparatus 140 in performing S1306.

Specifically, for execution actions of the units of the communication apparatus, refer to related execution actions of the first user equipment in the methods shown in FIG. 8A and FIG. 8B to FIG. 13A and FIG. 13B. Details are not described again.

In another implementation, the communication apparatus 140 shown in FIG. 14 includes a processing module and a communication module. The processing module is configured to control and manage an action of the communication apparatus 140. For example, the processing module may integrate functions of the processing unit 1401, and may be configured to support the communication apparatus 140 in performing S802, S1002, S1102, S1103, S1202, S1203, S1204, S1205, S1306, and another process in the technology described in this specification. The communication module may integrate functions of the receiving unit 1402 and the sending unit 1403, and may be configured to support the communication apparatus 140 in performing S803, S805, S1004, S1005, S1102, S1103, S1202, S1203, and S1306, and communicating with another network entity, for example, communicating with a functional module or a network entity shown in FIG. 6. The communication apparatus 140 may further include a storage module, configured to store program code and data that are of the communication apparatus 140.

The processing module may be a processor or a controller, and may implement or execute various example logical blocks, modules, and circuits described based on content disclosed in this application. Alternatively, the processor may be a combination of processors implementing a computing function, for example, a combination including one or more microprocessors, or a combination of a DSP and a microprocessor. The communication module may be a transceiver circuit, a communication interface, or the like. The storage module may be a memory. When the processing module is the processor, the communication module is the communication interface, and the storage module is the memory, the communication apparatus 140 in this embodiment of this application may be the communication apparatus 700 shown in FIG. 7.

FIG. 15 is a structural diagram of a communication apparatus 150. The communication apparatus 150 may be second user equipment, or a chip or a chip system in the second user equipment. The communication apparatus 150 may be configured to perform functions of the second user equipment in the foregoing embodiments. In an implementation, the communication apparatus shown in FIG. 15 may include a processing unit 1501 and a sending unit 1502.

In a possible design, the sending unit 1502 is configured to: broadcast an L2 identifier of the second user equipment, establish a unicast connection to first user equipment, and provide a relay service for the first user equipment. For example, the sending unit 1502 may support the communication apparatus 150 in performing S801 and S901.

In another possible design, the sending unit 1502 is configured to: broadcast a discovery message (for example, may be referred to as a discovery message), establish a unicast connection to first user equipment, and send an RNTI of relay UE to the first user equipment through the unicast connection, to provide a relay service for the first user equipment. For example, the sending unit 1502 may support the communication apparatus 150 in performing S1001 S1003, and S1004.

In still another possible design, the sending unit 1502 is configured to broadcast a discovery message (for example, may be referred to as a discovery message), where the discovery message may carry a first identifier of the second user equipment, the first identifier is obtained through encryption by using a first algorithm, the first identifier may be parsed by only a network side device, and the first identifier of the second user equipment corresponds to an RNTI of the second user equipment. For example, the sending unit 1502 may support the communication apparatus 150 in performing S1101.

In yet another possible design, the sending unit 1502 is configured to broadcast a discovery message (for example, may be referred to as a discovery message), where the discovery message does not carry an RNTI of the second user equipment; and after the second user equipment is selected by first user equipment as target second user equipment, the RNTI and/or a cell ID of the second user equipment is sent to the first user equipment through a unicast connection. For example, the sending unit 1502 may support the communication apparatus 150 in performing S1201 and S1204.

Specifically, for execution actions of the units of the communication apparatus 150, refer to related execution actions of the second user equipment in the methods shown in FIG. 8A and FIG. 8B to FIG. 13A and FIG. 13B. Details are not described again.

In another implementation, the communication apparatus 150 shown in FIG. 15 includes a processing module and a communication module. The processing module is configured to control and manage an action of the communication apparatus 150. For example, the processing module may integrate functions of the processing unit 1501, and may be configured to support the communication apparatus 150 in performing S 1204 and another process in the technology described in this specification. The communication module may integrate functions of the sending unit 1502, and may be configured to support the communication apparatus 150 in performing S801, S901, S1001, S1003, S1004, S1101, S1201, and S1204, and communicating with another network entity, for example, communicating with a functional module or a network entity shown in FIG. 6. The communication apparatus 150 may further include a storage module, configured to store program code and data that are of the communication apparatus 150.

The processing module may be a processor or a controller, and may implement or execute various example logical blocks, modules, and circuits described based on content disclosed in this application. Alternatively, the processor may be a combination of processors implementing a computing function, for example, a combination of one or more microprocessors, or a combination of a DSP and a microprocessor. The communication module may be a transceiver circuit, a communication interface, or the like. The storage module may be a memory. When the processing module is the processor, the communication module is the communication interface, and the storage module is the memory, the communication apparatus 150 in this embodiment of this application may be the communication apparatus 700 shown in FIG. 7.

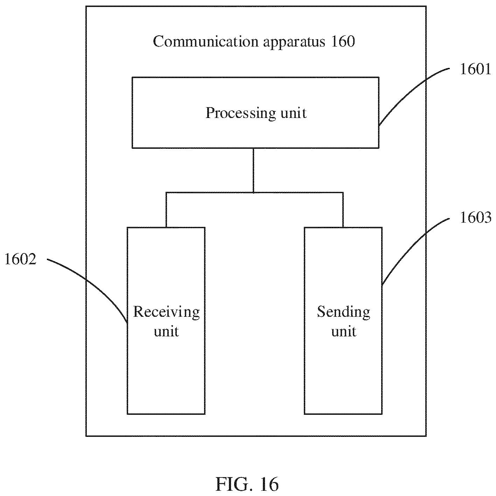

FIG. 16 is a structural diagram of a communication apparatus 160. The communication apparatus 160 may be a first access network device, or a chip or a chip system in the first access network device. The communication apparatus 160 may be configured to perform functions of the first access network device in the foregoing embodiments. In an implementation, the communication apparatus shown in FIG. 16 may include a processing unit 1601, a receiving unit 1602, and a sending unit 1603.

In a possible design, the receiving unit 1602 is configured to receive first information from first user equipment, where the first information may be used by the first access network device to select target second user equipment, for example, the first information may include signal quality of at least one second user equipment and identification information of the at least one second user equipment (for example, an L2 identifier or a temporary identifier of second user equipment). The processing unit 1601 is configured to select the target second user equipment based on the first information. For example, the processing unit 1601 and the receiving unit 1602 support the communication apparatus 160 in performing S803, S804, S903, and S904.

In another possible design, the receiving unit 1602 is configured to receive first information from first user equipment, where the first information may be used by the first access network device to select target second user equipment, for example, the first information may include signal quality of at least one second user equipment and an RNTI of the at least one second user equipment. The processing unit 1601 is configured to select the target second user equipment based on the first information. For example, the processing unit 1601 and the receiving unit 1602 may support the communication apparatus 160 in performing S1005 and S1006.

In still another possible design, the receiving unit 1602 is configured to receive first information from first user equipment, where the first information may be used by the first access network device to select target second user equipment, for example, the first information may include signal quality of at least one second user equipment and a first identifier of the at least one second user equipment, the first identifier is obtained through encryption by using a first algorithm, the first identifier may be parsed by only a network side device, and the first identifier of the second user equipment corresponds to an RNTI of the second user equipment. The processing unit 1601 is configured to select the target second user equipment based on the first information. For example, the processing unit 1601 and the receiving unit 1602 may support the communication apparatus 160 in performing S1103 and S1104.

In yet another possible design, the receiving unit 1602 is configured to receive an RNTI and/or a cell ID of target second user equipment from first user equipment. The processing unit 1601 is configured to send, by a sending unit 1603 to second user equipment based on the cell ID of the target second user equipment, a third request that carries the RNTI of the target second user equipment, to request a second access network device to establish a relay path that passes through the target second user equipment. Alternatively, the sending unit 1603 sends identification information of the first user equipment to second access network device. For example, the processing unit 1601, the receiving unit 1602, and the sending unit 1603 may support the communication apparatus 160 in performing S105, S1206, S1305, or the like.

Specifically, for execution actions of the units of the communication apparatus 160, refer to related execution actions of the first access network device in the methods shown in FIG. 8A and FIG. 8B to FIG. 13A and FIG. 13B. Details are not described again.

In another implementation, the communication apparatus 160 shown in FIG. 16 includes a processing module and a communication module. The processing module is configured to control and manage an action of the communication apparatus 160. For example, the processing module may integrate functions of the processing unit 1601, and may be configured to support the communication apparatus 160 in performing S804, S904, S1006, S1104, and another process in the technology described in this specification. The communication module may integrate functions of the receiving unit 1601 and the sending unit 1603, and may be configured to support the communication apparatus 160 in performing S805, S905, S1005, S1105, S1206, and S1305, and communicating with another network entity, for example, communicating with a functional module or a network entity shown in FIG. 6. The communication apparatus 160 may further include a storage module, configured to store program code and data that are of the communication apparatus 160.

The processing module may be a processor or a controller, and may implement or execute various example logical blocks, modules, and circuits described based on content disclosed in this application. Alternatively, the processor may be a combination of processors implementing a computing function, for example, a combination including one or more microprocessors, or a combination of a DSP and a microprocessor. The communication module may be a transceiver circuit, a communication interface, or the like. The storage module may be a memory. When the processing module is the processor, the communication module is the communication interface, and the storage module is the memory, the communication apparatus 160 in this embodiment of this application may be the communication apparatus 700 shown in FIG. 7.

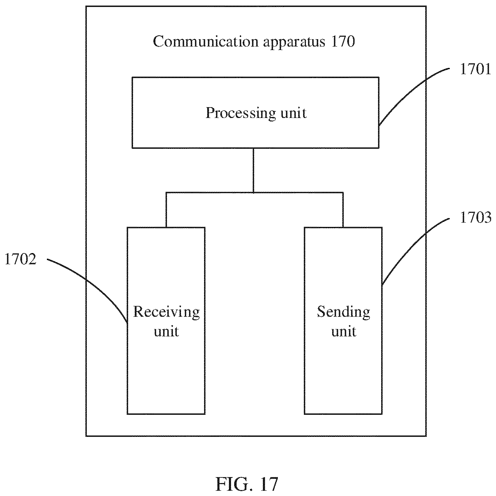

FIG. 17 is a structural diagram of a communication apparatus 170. The communication apparatus 170 may be a second access network device, or a chip or a chip system in the second access network device. The communication apparatus 170 may be configured to perform functions of the second access network device in the foregoing embodiments. In an implementation, the communication apparatus shown in FIG. 17 may include a processing unit 1701, a receiving unit 1702, and a sending unit 1703.

In a possible design, the receiving unit 1702 is configured to: receive a third request that is from a first access network device and that carries identification information of the first user equipment, receive a second request that is from target second user equipment and that carries the first user equipment, and perform RRC connection reconfiguration on the target second user equipment. The sending unit 1703 is configured to send a response to the third request to the first access network device, to trigger the first access network device to perform RRC connection reconfiguration for the first user equipment. For example, the receiving unit 1702 and the sending unit 1703 may support the communication apparatus 170 in performing S906, S908, S909, S1305, S1307, and S1308.

In another possible design, the receiving unit 1702 is configured to receive a third request that is from a first access network device and that carries a first identifier of target second user equipment. The processing unit 1701 is configured to decrypt the first identifier of the target second user equipment according to a first algorithm to obtain an RNTI of the target second user equipment. The sending unit 1703 is configured to send an RRC connection configuration to the target second user equipment based on the RNTI of the target second user equipment, and send a response to the third request to the first access network device. For example, the processing unit 1701, the receiving unit 1702, and the sending unit 1703 may support the communication apparatus 170 in performing S1105 and S1106.

Specifically, for execution actions of the units of the communication apparatus 170, refer to related execution actions of the second access network device in the methods shown in FIG. 9A and FIG. 9B, FIG. 11A and FIG. 11B, or FIG. 13A and FIG. 13B. Details are not described again.

In another implementation, the communication apparatus 170 shown in FIG. 17 includes a processing module and a communication module. The processing module is configured to control and manage an action of the communication apparatus 170. For example, the processing module may integrate functions of the processing unit 1701, and may be configured to support the communication apparatus 170 in performing a process of decrypting the first identifier of the target second user equipment according to the first algorithm to obtain the RNTI of the target second user equipment and another process in the technology described in this specification. The communication module may integrate functions of the receiving unit 1701 and the sending unit 1703, and may be configured to support the communication apparatus 170 in performing S906, S908, S909, S1105, S1106, S1305, S1307, and S1308, and communicating with another network entity, for example, communicating with a functional module or a network entity shown in FIG. 6. The communication apparatus 170 may further include a storage module, configured to store program code and data that are of the communication apparatus 170.

The processing module may be a processor or a controller, and may implement or execute various example logical blocks, modules, and circuits described based on content disclosed in this application. Alternatively, the processor may be a combination of processors implementing a computing function, for example, a combination including one or more microprocessors, or a combination of a DSP and a microprocessor. The communication module may be a transceiver circuit, a communication interface, or the like. The storage module may be a memory. When the processing module is the processor, the communication module is the communication interface, and the storage module is the memory, the communication apparatus 170 in this embodiment of this application may be the communication apparatus 700 shown in FIG. 7.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus (including a data transmit end and/or a data receive end) in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) of the communication apparatus. Further, the computer-readable storage medium may include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

A computer program product is provided, where the computer program product includes computer instructions, and when the computer instructions are run on a computer, the computer is enabled to perform all or some of the procedures in the foregoing method embodiments.

An embodiment of this application further provides a chip system. The chip system may include one or more processors and a communication interface. Optionally, the chip system may further include a memory, and the chip system may perform all or some of the procedures in the foregoing method embodiments.

It should be noted that, in the specification, claims, and accompanying drawings of this application, the terms "first", "second", and the like are intended to distinguish between different objects but do not indicate a particular order. In addition, terms such as "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division of the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A relay communication method, wherein the method is applied to first user equipment, and the method comprises:
receiving a layer 2 L2 identifier corresponding to at least one second user equipment; and
sending first information to a first access network device, wherein the first information comprises identification information of the at least one second user equipment and signal quality of the at least one second user equipment, and the identification information of the second user equipment comprises the layer 2 L2 identifier of the second user equipment or a temporary identifier of the second user equipment.

2. The method according to claim 1, wherein the method further comprises:
receiving first indication information from the first access network device, wherein the first indication information indicates target second user equipment, the target second user equipment belongs to the at least one second user equipment, and the target second user equipment is configured to provide a relay service for the first user equipment.

3. The method according to claim 2, wherein the method further comprises:
obtaining second information from the target second user equipment based on the first indication information, wherein the second information comprises a radio network temporary identifier RNTI of the target second user equipment and a cell identifier cell ID of the target second user equipment; and
sending the second information to the first access network device.

4. The method according to claim 3, wherein the obtaining, by the first user equipment, the second information from the target second user equipment comprises:
obtaining, by the first user equipment, the second information from the target second user equipment through a unicast connection.

5. The method according to claim 3 or 4, wherein
the RNTI of the target second user equipment comprises a temporary mobile subscriber identifier S-TMSI of the target second user equipment, an inactive radio network temporary identifier I-RNTI of the target second user equipment, or a cell radio network temporary identifier C-RNTI of the target second user equipment.

6. A relay communication method, wherein the method is applied to first user equipment, and the method comprises:
receiving, through a unicast connection, a radio network temporary identifier RNTI and a cell identifier cell ID that correspond to at least one second user equipment; and
sending first information to a first access network device, wherein the first information comprises the radio network temporary identifier RNTI of the at least one second user equipment, the cell ID of the at least one second user equipment, and signal quality of the at least one second user equipment.

7. The method according to claim 6, wherein the method further comprises:
receiving first indication information from the first access network device, wherein the first indication information indicates target second user equipment, the target second user equipment belongs to the at least one second user equipment, and the target second user equipment is configured to provide a relay service for the first user equipment.

8. The method according to claim 6 or 7, wherein the method further comprises:
sending a first request to non-target second user equipment, wherein the first request is used to request to release a unicast connection between the first user equipment and the non-target second user equipment; and
the non-target second user equipment is second user equipment other than the target second user equipment in the at least one second user equipment, the target second user equipment is selected from the at least one second user equipment, and the target second user equipment is configured to provide the relay service for the first user equipment.

9. The method according to claim 8, wherein the method further comprises:
receiving second indication information from the first access network device; and
the sending a first request to non-target second user equipment comprises: sending, by the first user equipment, the first request to the non-target second user equipment based on the second indication information.

10. The method according to any one of claims 6 to 9, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

11. A relay communication method, wherein the method is applied to first user equipment, and the method comprises:
receiving a discovery message broadcast by at least one second user equipment;
selecting target second user equipment from the at least one second user equipment based on the discovery message broadcast by the at least one second user equipment, wherein the target second user equipment is second user equipment that is configured to provide a relay service for the first user equipment; and
obtaining a cell identifier cell ID of the target second user equipment and an RNTI of the target second user equipment from the target second user equipment through a unicast connection.

12. The method according to claim 11, wherein the method further comprises:
sending second information to a first access network device, wherein the second information carries the cell identifier cell ID of the target second user equipment and the RNTI of the target second user equipment.

13. The method according to claim 12, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

14. A relay communication method, wherein the method is applied to second user equipment, and the method comprises:
broadcasting a discovery message, wherein the discovery message is used by first user equipment to discover the second user equipment; and
establishing a unicast connection to the first user equipment, and sending an RNTI of the second user equipment and a cell identifier cell ID of the second user equipment to the first user equipment through the unicast connection.

15. The method according to claim 14, wherein the method further comprises:
receiving a first request, and releasing the unicast connection based on the first request, wherein the first request is used to request to release the unicast connection between the first user equipment and the second user equipment.

16. The method according to claim 14 or 15, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

17. A relay communication method, wherein the method is applied to first access network device, and the method comprises:
receiving first information from first user equipment, wherein the first information comprises identification information of at least one second user equipment and signal quality of the at least one second user equipment, and the identification information of the second user equipment comprises a layer 2 L2 identifier of the second user equipment or a temporary identifier of the second user equipment; and
selecting target second user equipment from the at least one second user equipment based on the first information, wherein the target second user equipment is configured to provide a relay service for the first user equipment.

18. The method according to claim 17, wherein the method further comprises:
sending first indication information to the first user equipment, wherein the first indication information indicates the target second user equipment, and the first indication information comprises identification information of the target second user equipment.

19. The method according to claim 17 or 18, wherein the method further comprises:
receiving second information from the first user equipment, wherein the second information comprises a radio network temporary identifier RNTI of the target second user equipment and a cell identifier cell ID of the target second user equipment; and
sending a third request to a second access network device based on the cell ID of the target second user equipment, wherein the third request comprises the RNTI of the target second user equipment.

20. The method according to claim 19, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

21. A communication apparatus, wherein the communication apparatus is configured to perform the relay communication method according to any one of claims 1 to 5, the relay communication method according to any one of claims 6 to 10, or the relay communication method according to any one of claims 11 to 13.

22. A communication apparatus, wherein the communication apparatus is configured to perform the relay communication method according to any one of claims 14 to 16.

23. A communication apparatus, wherein the communication apparatus is configured to perform the relay communication method according to any one of claims 17 to 20.

24. A relay communication system, comprising the communication apparatus according to claim 21, the communication apparatus according to claim 22, the communication apparatus according to claim 23, and a second access network device.

25. A communication apparatus, wherein the communication apparatus comprises a processor and a communication interface, and the processor and the communication interface are configured to support the communication apparatus in performing the method according to any one of claims 1 to 5, the method according to any one of claims 6 to 10, the method according to any one of claims 11 to 13, the method according to any one of claims 14 to 16, or the method according to any one of claims 17 to 20.

26. A computer-readable storage medium, wherein the computer-readable storage medium stores computer instructions, and when the computer instructions are run on a computer, the computer is enabled to perform the method according to any one of claims 1 to 5, the method according to any one of claims 6 to 10, the method according to any one of claims 11 to 13, the method according to any one of claims 14 to 16, or the method according to any one of claims 17 to 20.

27. A computer program product, wherein the computer program product comprises computer instructions, and when the computer instructions are run on a computer, the computer is enabled to perform the method according to any one of claims 1 to 5, the method according to any one of claims 6 to 10, the method according to any one of claims 11 to 13, the method according to any one of claims 14 to 16, or the method according to any one of claims 17 to 20.

## Amended claims

### Amended claims under Art. 19.1 PCT

1. A relay communication method, wherein the method is applied to first user equipment, and the method comprises:
receiving a layer 2 L2 identifier corresponding to at least one second user equipment; and
sending first information to a first access network device, wherein the first information comprises identification information of the at least one second user equipment and signal quality of the at least one second user equipment, and the identification information of the second user equipment comprises the layer 2 L2 identifier of the second user equipment or a temporary identifier of the second user equipment.

2. The method according to claim 1, wherein the method further comprises:
receiving first indication information from the first access network device, wherein the first indication information indicates target second user equipment, the target second user equipment belongs to the at least one second user equipment, and the target second user equipment is configured to provide a relay service for the first user equipment.

3. The method according to claim 2, wherein the method further comprises:
obtaining second information from the target second user equipment based on the first indication information, wherein the second information comprises a radio network temporary identifier RNTI of the target second user equipment and a cell identifier cell ID of the target second user equipment; and
sending the second information to the first access network device.

4. The method according to claim 3, wherein the obtaining, by the first user equipment, the second information from the target second user equipment comprises:
obtaining, by the first user equipment, the second information from the target second user equipment through a unicast connection.

5. The method according to claim 3 or 4, wherein
the RNTI of the target second user equipment comprises a temporary mobile subscriber identifier S-TMSI of the target second user equipment, an inactive radio network temporary identifier I-RNTI of the target second user equipment, or a cell radio network temporary identifier C-RNTI of the target second user equipment.

6. A relay communication method, wherein the method is applied to first user equipment, and the method comprises:
receiving, through a unicast connection, a radio network temporary identifier RNTI and a cell identifier cell ID that correspond to at least one second user equipment; and
sending first information to a first access network device, wherein the first information comprises the radio network temporary identifier RNTI of the at least one second user equipment, the cell ID of the at least one second user equipment, and signal quality of the at least one second user equipment.

7. The method according to claim 6, wherein the method further comprises:
receiving first indication information from the first access network device, wherein the first indication information indicates target second user equipment, the target second user equipment belongs to the at least one second user equipment, and the target second user equipment is configured to provide a relay service for the first user equipment.

8. The method according to claim 6 or 7, wherein the method further comprises:
sending a first request to non-target second user equipment, wherein the first request is used to request to release a unicast connection between the first user equipment and the non-target second user equipment; and
the non-target second user equipment is second user equipment other than the target second user equipment in the at least one second user equipment, the target second user equipment is selected from the at least one second user equipment, and the target second user equipment is configured to provide the relay service for the first user equipment.

9. The method according to claim 8, wherein the method further comprises:
receiving second indication information from the first access network device; and
the sending a first request to non-target second user equipment comprises: sending, by the first user equipment, the first request to the non-target second user equipment based on the second indication information.

10. The method according to any one of claims 6 to 9, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

11. A relay communication method, wherein the method is applied to first user equipment, and the method comprises:
receiving a discovery message broadcast by at least one second user equipment;
selecting target second user equipment from the at least one second user equipment based on the discovery message broadcast by the at least one second user equipment, wherein the target second user equipment is second user equipment that is configured to provide a relay service for the first user equipment; and
obtaining a cell identifier cell ID of the target second user equipment and an RNTI of the target second user equipment from the target second user equipment through a unicast connection.

12. The method according to claim 11, wherein the method further comprises:
sending second information to a first access network device, wherein the second information carries the cell identifier cell ID of the target second user equipment and the RNTI of the target second user equipment.

13. The method according to claim 12, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

14. A relay communication method, wherein the method is applied to second user equipment, and the method comprises:
broadcasting a discovery message, wherein the discovery message is used by first user equipment to discover the second user equipment; and
establishing a unicast connection to the first user equipment, and sending an RNTI of the second user equipment and a cell identifier cell ID of the second user equipment to the first user equipment through the unicast connection.

15. The method according to claim 14, wherein the method further comprises:
receiving a first request, and releasing the unicast connection based on the first request, wherein the first request is used to request to release the unicast connection between the first user equipment and the second user equipment.

16. The method according to claim 14 or 15, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

17. A relay communication method, wherein the method is applied to first access network device, and the method comprises:
receiving first information from first user equipment, wherein the first information comprises identification information of at least one second user equipment and signal quality of the at least one second user equipment, and the identification information of the second user equipment comprises a layer 2 L2 identifier of the second user equipment or a temporary identifier of the second user equipment; and
selecting target second user equipment from the at least one second user equipment based on the first information, wherein the target second user equipment is configured to provide a relay service for the first user equipment.

18. The method according to claim 17, wherein the method further comprises:
sending first indication information to the first user equipment, wherein the first indication information indicates the target second user equipment, and the first indication information comprises identification information of the target second user equipment.

19. The method according to claim 17 or 18, wherein the method further comprises:
receiving second information from the first user equipment, wherein the second information comprises a radio network temporary identifier RNTI of the target second user equipment and a cell identifier cell ID of the target second user equipment; and
sending a third request to a second access network device based on the cell ID of the target second user equipment, wherein the third request comprises the RNTI of the target second user equipment.

20. The method according to claim 19, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

21. A relay communication method, wherein the method is applied to second user equipment, and the method comprises:
receiving identification information of first user equipment from the first user equipment, and establishing, by the second user equipment, a relay path to a second access network device in response to the receiving the identification information of the first user equipment from the first user equipment, wherein the second user equipment is configured to provide a relay service for the first user equipment; and
sending a second request to the second access network device, wherein the second request is used to request to establish a relay path for the first user equipment.

22. The method according to claim 21, wherein the identification information of the first user equipment comprises a radio network temporary identifier of the first user equipment, a layer 2 L2 identifier of the first user equipment, or a temporary identifier of the first user equipment.

23. The method according to claim 21 or 22, wherein the second request comprises the identification information of the first user equipment.

24. The method according to any one of claims 21 to 23, wherein the method further comprises:
receiving a radio resource control connection reconfiguration message from the second access network device.

25. The method according to claim 24, wherein the method further comprises:
configuring a radio bearer between the second user equipment and the second access network device and a sidelink radio bearer between the second user equipment and the first user equipment based on the radio resource control connection reconfiguration message.

26. The method according to any one of claims 21 to 25, wherein the method further comprises:
forwarding, by the second user equipment to the second access network device, a radio link control connection reconfiguration complete message from the first user equipment.

27. The method according to any one of claims 21 to 26, wherein the method further comprises:
broadcasting, by the second user equipment, a discovery message.

28. A communication apparatus, wherein the communication apparatus is configured to perform the relay communication method according to any one of claims 1 to 5, the relay communication method according to any one of claims 6 to 10, or the relay communication method according to any one of claims 11 to 13.

29. A communication apparatus, wherein the communication apparatus is configured to perform the relay communication method according to any one of claims 14 to 16.

30. A communication apparatus, wherein the communication apparatus is configured to perform the relay communication method according to any one of claims 17 to 20.

31. A communication apparatus, wherein the communication apparatus is configured to perform the relay communication method according to any one of claims 21 to 27.

32. A communication apparatus, comprising:
a receiving unit, configured to receive a layer 2 L2 identifier corresponding to at least one second user equipment; and
a sending unit, configured to send first information to a first access network device, wherein the first information comprises identification information of the at least one second user equipment and signal quality of the at least one second user equipment, and the identification information of the second user equipment comprises the layer 2 L2 identifier of the second user equipment or a temporary identifier of the second user equipment.

33. The apparatus according to claim 32, wherein the receiving unit is further configured to receive first indication information from the first access network device; and the first indication information indicates target second user equipment, the target second user equipment belongs to the at least one second user equipment, and the target second user equipment is configured to provide a relay service for the first user equipment.

34. The apparatus according to claim 33, wherein the apparatus further comprises:
a processing unit, configured to obtain second information from the target second user equipment based on the first indication information, wherein the second information comprises a radio network temporary identifier RNTI of the target second user equipment and a cell identifier cell ID of the target second user equipment; and
the sending unit is further configured to send the second information to the first access network device.

35. The apparatus according to claim 34, wherein the receiving unit is specifically configured to obtain the second information from the target second user equipment through a unicast connection.

36. The apparatus according to claim 34 or 35, wherein
the RNTI of the target second user equipment comprises a temporary mobile subscriber identifier S-TMSI of the target second user equipment, an inactive radio network temporary identifier I-RNTI of the target second user equipment, or a cell radio network temporary identifier C-RNTI of the target second user equipment.

37. A communication apparatus, wherein the communication apparatus is first user equipment, or a chip or a chip system in the first user equipment, and the apparatus comprises:
a receiving unit, configured to receive, through a unicast connection, a radio network temporary identifier RNTI and a cell identifier cell ID that correspond to at least one second user equipment; and
a sending unit, configured to send first information to a first access network device, wherein the first information comprises the radio network temporary identifier RNTI of the at least one second user equipment, the cell ID of the at least one second user equipment, and signal quality of the at least one second user equipment.

38. The apparatus according to claim 37, wherein the receiving unit is further configured to receive first indication information from the first access network device; and the first indication information indicates target second user equipment, the target second user equipment belongs to the at least one second user equipment, and the target second user equipment is configured to provide a relay service for the first user equipment.

39. The apparatus according to claim 37 or 38, wherein the sending unit is further configured to send a first request to non-target second user equipment, wherein the first request is used to request to release a unicast connection between the first user equipment and the non-target second user equipment; and
the non-target second user equipment is second user equipment other than the target second user equipment in the at least one second user equipment, the target second user equipment is selected from the at least one second user equipment, and the target second user equipment is configured to provide the relay service for the first user equipment.

40. The apparatus according to claim 39, wherein the receiving unit is further configured to receive second indication information from the first access network device; and
the receiving unit is specifically configured to send the first request to the non-target second user equipment based on the second indication information.

41. The apparatus according to any one of claims 37 to 40, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

42. A relay communication apparatus, wherein the apparatus is first user equipment, or a chip or a chip system in the first user equipment, and the apparatus comprises:
a receiving unit, configured to receive a discovery message broadcast by at least one second user equipment; and
a processing unit, configured to select target second user equipment from the at least one second user equipment based on the discovery message broadcast by the at least one second user equipment, wherein the target second user equipment is second user equipment that is configured to provide a relay service for the first user equipment; and
the receiving unit is configured to obtain a cell identifier cell ID of the target second user equipment and an RNTI of the target second user equipment from the target second user equipment through a unicast connection.

43. The apparatus according to claim 42, wherein the sending unit is further configured to send second information to a first access network device, wherein the second information carries the cell identifier cell ID of the target second user equipment and the RNTI of the target second user equipment.

44. The apparatus according to claim 43, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

45. A relay communication apparatus, wherein the apparatus is second user equipment, or a chip or a chip system in the second user equipment, and the apparatus comprises:
a sending unit, configured to broadcast a discovery message, wherein the discovery message is used by first user equipment to discover the second user equipment; and
a processing unit, configured to establish a unicast connection to the first user equipment, wherein the sending unit is further configured to send an RNTI of the second user equipment and a cell identifier cell ID of the second user equipment to the first user equipment through the unicast connection.

46. The apparatus according to claim 45, wherein the apparatus further comprises:
a receiving unit, configured to receive a first request, and release the unicast connection based on the first request, wherein the first request is used to request to release the unicast connection between the first user equipment and the second user equipment.

47. The apparatus according to claim 45 or 46, wherein
the RNTI of the second user equipment comprises a temporary mobile subscriber identifier S-TMSI of the second user equipment, an inactive radio network temporary identifier I-RNTI of the second user equipment, or a temporary mobile subscriber identifier C-RNTI of the second user equipment.

48. A relay communication apparatus, wherein the apparatus is a first access network device, or a chip or a chip system in the first access network device, and the apparatus comprises:
a receiving unit, configured to receive first information from first user equipment, wherein the first information comprises identification information of at least one second user equipment and signal quality of the at least one second user equipment, and the identification information of the second user equipment comprises a layer 2 L2 identifier of the second user equipment or a temporary identifier of the second user equipment; and
a processing unit, configured to select target second user equipment from the at least one second user equipment based on the first information, wherein the target second user equipment is configured to provide a relay service for the first user equipment.

49. The apparatus according to claim 48, wherein the apparatus further comprises:
a sending unit, configured to send first indication information to the first user equipment, wherein the first indication information indicates the target second user equipment, and the first indication information comprises identification information of the target second user equipment.

50. The apparatus according to claim 48 or 49, wherein the receiving unit is further configured to receive second information from the first user equipment, wherein the second information comprises a radio network temporary identifier RNTI of the target second user equipment and a cell identifier cell ID of the target second user equipment; and
the processing unit is further configured to send a third request to a second access network device based on the cell ID of the target second user equipment, wherein the third request comprises the RNTI of the target second user equipment.

51. The apparatus according to claim 50, wherein
the RNTI of the target second user equipment comprises a temporary mobile subscriber identifier S-TMSI of the target second user equipment, an inactive radio network temporary identifier I-RNTI of the target second user equipment, or a temporary mobile subscriber identifier C-RNTI of the target second user equipment.

52. A relay communication apparatus, wherein the apparatus is second user equipment, or a chip or a chip system in the second user equipment, and the apparatus comprises:
a receiving unit, configured to receive identification information of first user equipment from the first user equipment, and a processing unit, configured to establish a relay path to a second access network device in response to the receiving the identification information of the first user equipment from the first user equipment, wherein the second user equipment is configured to provide a relay service for the first user equipment; and
a sending unit, configured to send a second request to the second access network device, wherein the second request is used to request to establish a relay path for the first user equipment.

53. The apparatus according to claim 52, wherein the identification information of the first user equipment comprises a radio network temporary identifier of the first user equipment, a layer 2 L2 identifier of the first user equipment, or a temporary identifier of the first user equipment.

54. The apparatus according to claim 52 or 53, wherein the second request comprises the identification information of the first user equipment.

55. The apparatus according to any one of claims 52 to 54, wherein the receiving unit is further configured to receive a radio resource control connection reconfiguration message from the second access network device.

56. The apparatus according to claim 55, wherein the processing unit is further configured to configure a radio bearer between the second user equipment and the second access network device and a sidelink radio bearer between the second user equipment and the first user equipment based on the radio resource control connection reconfiguration message.

57. The apparatus according to any one of claims 52 to 56, wherein the sending unit is further configured to forward, to the second access network device, a radio link control connection reconfiguration complete message from the first user equipment.

58. The apparatus according to any one of claims 52 to 57, wherein the sending unit is further configured to broadcast a discovery message.

59. A relay communication system, comprising the communication apparatus according to claim 28, the communication apparatus according to claim 29, the communication apparatus according to claim 30, the communication apparatus according to claim 31, and a second access network device.

60. A communication apparatus, wherein the communication apparatus comprises a processor and a communication interface, and the processor and the communication interface are configured to support the communication apparatus in performing the method according to any one of claims 1 to 5, the method according to any one of claims 6 to 10, the method according to any one of claims 11 to 13, the method according to any one of claims 14 to 16, the method according to any one of claims 17 to 20, or the method according to any one of claims 21 to 27.

61. A computer-readable storage medium, wherein the computer-readable storage medium stores computer instructions, and when the computer instructions are run on a computer, the computer is enabled to perform the method according to any one of claims 1 to 5, the method according to any one of claims 6 to 10, the method according to any one of claims 11 to 13, the method according to any one of claims 14 to 16, the method according to any one of claims 17 to 20, or the method according to any one of claims 21 to 27.

62. A computer program product, wherein the computer program product comprises computer instructions, and when the computer instructions are run on a computer, the computer is enabled to perform the method according to any one of claims 1 to 5, the method according to any one of claims 6 to 10, the method according to any one of claims 11 to 13, the method according to any one of claims 14 to 16, the method according to any one of claims 17 to 20, or the method according to any one of claims 21 to 27.
